# EUROPEAN PATENT SPECIFICATION

(11) **EP 3 037 784 B1**
(45) Date of publication and mention of the grant of the patent: **01.05.2019**
(21) Application number: 14199992.0
(22) Date of filing: 23.12.2014
(51) Int. Cl.: G01C 21/36, G09B 29/10, G06F 3/0485, G06F 3/01, G02B 27/01

(54) **Causation of display of supplemental map information**
Herbeiführung einer Anzeige zusätzlicher Karteninformationen
Induction de l'affichage d'informations cartographiques supplémentaires

(43) Date of publication of application: 29.06.2016
(73) Proprietor: Nokia Technologies Oy, 02610 Espoo (FI)
(72) Inventor: Eronen, Antti, 33820 Tampere (FI); Leppänen, Jussi, 33580 Tampere (FI); Lehtiniemi, Arto, 33880 Lempäälä (FI)
(74) Representative: Nokia EPO representatives

(56) References cited:
- US-A1- 2005 248 529
- US-A1- 2006 028 400
- US-A1- 2012 316 782

## Description

### TECHNICAL FIELD

The present application relates generally to causation of display of supplemental map information.

### BACKGROUND

As electronic apparatuses become increasingly prevalent and pervasive in our society, users of electronics apparatuses increasingly depend on their electronic apparatuses to assist the users in various aspects of the users' lives. Many users rely on their electronic apparatus for purposes relating to mapping activities. For example, a user may utilize an electronic apparatus to view map information, to generate navigational information, and/or the like. As such, it may be desirable to configure an electronic apparatus such that the electronic apparatus facilitates various mapping activities in a manner that is unobtrusive and intuitive. US20050248529 A1 is a publication that relates to an operational input device and a method of operation input and is suitable specifically for an operation input device for issuing instructions to a computer system or a navigation system through the input operation by an operator. US20120316782 A1 is a publication that relates generally to digital maps and in particular to techniques for zooming or magnifying digital maps.

### SUMMARY

Various aspects of examples of the invention are set out in the claims.

In particular, the invention provides for a method according to claim 1, an apparatus according to claim 8, and a computer readable medium according to claim 11.

In at least one example embodiment, the receipt of information indicative of the first display input comprises receipt of information indicative of the first display input at the first display input position on the display, and determination that the first display input position corresponds with the first map position.

In at least one example embodiment, the determination that the first display input position corresponds with the first map position comprises determination that a position of the first display input position on the display corresponds with a position of the first map position on the display.

The first non-display input is an input that fails to correspond with the display.

In at least one example embodiment, the first non-display input is an input that fails to correspond with any portion of the apparatus.

In at least one example embodiment, the first non-display input is an input that corresponds with a bezel adjacent to an edge of the display.

The first non-display input position fails to correspond with a display input position.

In at least one example embodiment, the first non-display input position corresponds with a position on a bezel adjacent to an edge of the display.

One or more example embodiments further perform, prior to the receipt of the first non-display input determination that the first display input has moved to a second display input position, on the display, that corresponds with a third map position along the traversable path that is indicated by the displayed portion of the map information, and causation of display of third supplemental map information that comprises at least one element associated with the third map position that is absent from the map information.

In at least one example embodiment, the second display input position is a position at an edge of the display.

One or more example embodiments further perform causation of termination of display of the first supplemental map information based, at least in part, on the determination that the first display input has moved to the second display input position.

In at least one example embodiment, the first non-display input is in a direction from an edge of the display that corresponds with a direction of the traversable path at the edge of the display.

One or more example embodiments further perform receipt of a second non-display input at a second non-display input position, and determination that the second non-display input is in a direction from the edge of the display that fails to correspond with the direction of the traversable path at the edge of the display.

One or more example embodiments further perform preclusion of causation of display of a third supplemental map information based, at least in part, on the determination that the second non-display input is in a direction from the edge of the display that fails to correspond with the direction of the traversable path at the edge of the display.

One or more example embodiments further perform determination that the second non-display input corresponds with a third map position along the traversable path, and causation of display of a third supplemental map information based, at least in part, on the determination that the second non-display input corresponds with the third map position along the traversable path, the third supplemental map information comprising at least one element associated with the third map position that is absent from the map information.

One or more example embodiments further perform receipt of a second non-display input at a second non-display input position, and causation of display of a third supplemental map information absent determination of a direction of the second non-display input from the edge of the display.

In at least one example embodiment, the first display input is an input that corresponds with the display.

The first display input is a touch input, and the display is a touch display.

In at least one example embodiment, the first display input is a hover input, and the first display input position is a position on the display that is normal to the hover input.

In at least one example embodiment, the receipt of information indicative of the first non-display input at the first non-display input position comprises receipt of information indicative of an input implement at the first non-display input position.

In at least one example embodiment, the input implement is at least one of a finger, a hand, or a ring.

In at least one example embodiment, the input implement is any implement that may be tracked by the apparatus.

In at least one example embodiment, the information indicative of the input implement at the first non-display input position is received from a camera module.

In at least one example embodiment, the information indicative of the input implement at the first non-display input position is received from a sensor.

In at least one example embodiment, the sensor is at least one of a motion sensor, a proximity sensor, or a radar sensor.

Embodiments of the invention further perform, prior to the determination of the second map position along the traversable path, determination that the first non-display input is substantially coplanar with the display.

The determination that the first non-display input is substantially coplanar with the display comprises determination that the first non-display input is coplanar with the display within a coplanar tolerance.

In at least one example embodiment, the determination that the first non-display input is substantially coplanar with the display comprises determination that the first non-display input position is at a depth that is substantially coplanar with the plane of the display.

One or more example embodiments further perform, prior to the determination of the second map position along the traversable path, determination that the first non-display input fails to be substantially coplanar with the display.

In at least one example embodiment, the determination that the first non-display input fails to be substantially coplanar with the display comprises determination that the first non-display input fails to be coplanar with the display within a coplanar tolerance.

In at least one example embodiment, the determination that the first non-display input fails to be substantially coplanar with the display comprises determination that the first non-display input position is at a depth that fails to be substantially coplanar with the plane of the display.

One or more example embodiments further perform causation of display of additional map information.

In at least one example embodiment, the additional map information is map information that fails to be comprised by the displayed portion of the map information on the display.

In at least one example embodiment, the causation of display of the additional map information comprises sending the additional map information to a separate apparatus such that the separate apparatus is caused to display the additional map information.

In at least one example embodiment, the separate apparatus is at least one of a head mounted display, a see-through display, or a table top display.

In at least one example embodiment, the additional map information is caused to be displayed by the separate apparatus such that the additional map information is adjacent to at least a portion of the apparatus.

In at least one example embodiment, the additional map information is caused to be displayed by the separate apparatus such that the additional map information is adjacent to at least a portion of the display.

In at least one example embodiment, the additional map information is caused to be displayed by the separate apparatus such that the additional map information is adjacent to at least a portion of the displayed portion of the map information.

In at least one example embodiment, the additional map information is additional supplemental map information.

One or more example embodiments further perform causation of display of additional supplemental map information.

In at least one example embodiment, the additional supplemental map information is supplement map information that fails to be comprised by the displayed portion of the supplemental map information on the display.

In at least one example embodiment, the causation of display of the additional supplemental map information comprises sending the additional supplemental map information to a separate apparatus such that the separate apparatus is caused to display the additional supplemental map information.

In at least one example embodiment, the separate apparatus is at least one of a head mounted display, a see-through display, or a table top display.

In at least one example embodiment, the additional supplemental map information is caused to be displayed by the separate apparatus such that the additional supplemental map information is adjacent to at least a portion of the apparatus.

In at least one example embodiment, the additional supplemental map information is caused to be displayed by the separate apparatus such that the additional supplemental map information is adjacent to at least a portion of the display.

In at least one example embodiment, the additional supplemental map information is caused to be displayed by the separate apparatus such that the additional supplemental map information is adjacent to at least a portion of the displayed portion of the supplemental map information.

One or more example embodiments further perform receipt of information indicative of a non-display selection input at the first non-display input position, determination of a different portion of the map information based, at least in part, on the first non-display input position, and causation of display of the different portion of the map information in response to the non-display selection input.

One or more example embodiments further perform causation of termination of display of the displayed portion of the map information based, at least in part, on the non-display selection input.

One or more example embodiments further perform causation of termination of display of the displayed portion of the map information based, at least in part, on the determination of the different portion of the map information.

One or more example embodiments further perform causation of termination of display of the displayed portion of the map information based, at least in part, on the causation of display of the different portion of the map information.

One or more example embodiments further perform determination that the second map position corresponds with a predetermined portion of the traversable path.

One or more example embodiments further perform causation of actuation of an indication based, at least in part, on the determination that the second map position corresponds with the predetermined portion of the traversable path.

In at least one example embodiment, the indication is a non-visual indication.

In at least one example embodiment, the non-visual indication is at least one of an audible indication or a tactile indication.

In at least one example embodiment, the indication is a visual indication.

In at least one example embodiment, the traversable path is a navigational route.

In at least one example embodiment, the first non-display input is in a direction from the edge of the display that corresponds with a direction of the traversable path at the edge of the display.

In at least one example embodiment, the determination of the second map position comprises determination of a physical distance of the first non-display input position from the edge of the display, determination of a navigational distance along the navigational route based, at least in part, on the physical distance and scale information associated with the map information, identification of a third map position along the navigational route that corresponds with an edge of the displayed portion of the map information, the edge of the displayed portion of the map information corresponding with the edge of the display, and determination of the second map position to be a map position along the navigational route that is the navigational distance along the navigational route from the third map position.

In at least one example embodiment, the determination of the physical distance comprises determination of a physical course followed by an input implement, and determination of the physical distance along the physical course from the edge of the display to the first non-display input position.

In at least one example embodiment, the navigational route comprises information indicative of a route between a first location and a second location.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURE 2 is a diagram illustrating apparatus communication according to at least one example embodiment;
FIGURES 3A-3C are diagrams illustrating see through displays according to at least one example embodiment;
FIGURES 4A-4C are diagrams illustrating map information and supplemental map information according to at least one example embodiment;
FIGURES 5A-5C are diagrams illustrating map information and supplemental map information according to at least one example embodiment;
FIGURES 6A-6C are diagrams illustrating a display input and a non-display input according to at least one example embodiment;
FIGURES 7A-7D are diagrams illustrating a navigational route according to at least one example embodiment;
FIGURES 8A-8B are diagrams illustrating a non-display selection input according to at least one example embodiment;
FIGURES 9A-9B are diagrams illustrating a display input and a non-display input according to at least one example embodiment;
FIGURE 10 is a flow diagram illustrating activities associated with causation of display of supplemental map information according to at least one example embodiment;
FIGURE 11 is a flow diagram illustrating activities associated with causation of display of supplemental map information according to at least one example embodiment;
FIGURE 12 is a flow diagram illustrating activities associated with causation of display of supplemental map information according to at least one example embodiment;
FIGURE 13 is a flow diagram illustrating activities associated with causation of display of supplemental map information according to at least one example embodiment;
FIGURE 14 is a flow diagram illustrating activities associated with causation of display of supplemental map information according to at least one example embodiment;
FIGURE 15 is a flow diagram illustrating activities associated with causation of display of supplemental map information according to at least one example embodiment; and
FIGURE 16 is a flow diagram illustrating activities associated with causation of display of supplemental map information according to at least one example embodiment.

### DETAILED DESCRIPTION OF THE DRAWINGS

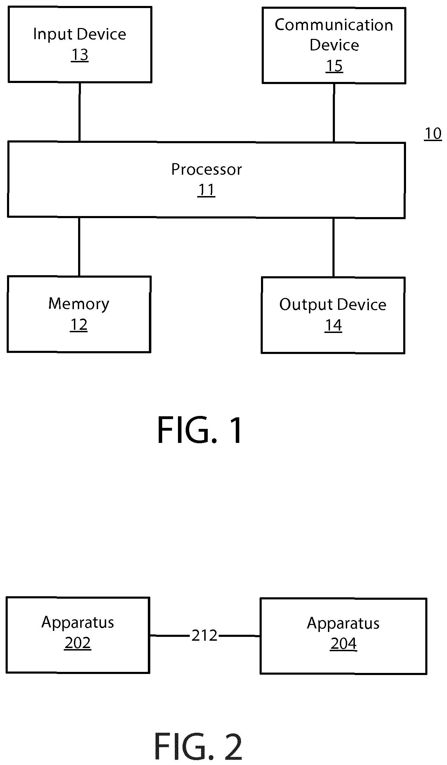

An embodiment of the invention and its potential advantages are understood by referring to FIGURES 1 through 16 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a head mounted display, a see through display, a wearable apparatus, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURE 2 is a diagram illustrating apparatus communication according to at least one example embodiment. The example of FIGURE 2 is merely an example and does not limit the scope of the claims. For example, apparatus count may vary, apparatus configuration may vary, communication channels may vary, and/or the like.

FIGURE 2 is a diagram illustrating apparatus communication according to at least one example embodiment. In the example of FIGURE 2, apparatus 202 is an electronic apparatus. An electronic apparatus may be an electronic apparatus that a user commonly utilizes to perform various tasks, functions, and/or the like. For example, the electronic apparatus may be a phone, a tablet, a music player, a personal data assistant, a computer, and/or the like. In the example of FIGURE 2, apparatus 204 is a separate electronic apparatus. A separate electronic apparatus may be an electronic apparatus that a user often utilizes in conjunction with the electronic apparatus. For example, a separate electronic apparatus may be a peripheral, such as a display, a headset, a head mounted display, a see through display, a monitor, a watch, an interactive table, a table display, and/or the like. Although the aforementioned example describes apparatus 202 and apparatus 204 as distinct types of apparatuses, namely, an electronic apparatus and a separate electronic apparatus, in some circumstances, the apparatuses may both be electronic apparatuses, both be separate electronic apparatuses, and/or the like.

In the example of FIGURE 2, apparatus 202 communicates with apparatus 204 by way of communication channel 212. For example, apparatus 202 may send information to apparatus 204 by way of communication channel 212, apparatus 202 may receive information sent from apparatus 204 by way of communication channel 212, and/or the like. A communication channel, for example, may be a channel utilized for sending and/or receiving of information, data, communications, and/or the like, between two or more apparatuses. It should be understood that, even though the example of FIGURE 2 illustrates a direct communication channel between apparatus 202 and apparatus 204, there may be intermediate apparatuses that facilitate communication between apparatus 202 and apparatus 204. For example, there may be one or more routers, hubs, switches, gateways, and/or the like, that are utilized in the communication channels between apparatus 202 and apparatus 204. In addition, there may be other separate apparatuses that apparatus 202 and/or apparatus 204 are in communication with. For example, apparatus 202 and/or apparatus 204 may be in communication with another apparatus, a separate apparatus, a different apparatus, and/or the like.

In some circumstances, a user may desire to have collaboration between apparatuses, such as between an apparatus and a separate apparatus, based on their proximity with each other. For example, it may be intuitive for a user to manage collaboration between apparatuses that are local to each other. A plurality of apparatuses may be proximate to each other based, at least in part, on location, availability of local communication among the apparatuses, and/or the like. For example, if the apparatuses collaborate by way of low power radio frequency communication, a radio frequency communication, near field communication, inductive communication, electric field communication, Bluetooth communication, infrared communication, local area network communication, wireless local area network communication, local port communication, input/output port communication, and/or the like, the apparatuses may be considered to be proximate with each other based, at least in part, on availability of such proximity-based communication with each other. In at least one example embodiment, an apparatus may be a phone, a tablet, a computer, a display, a monitor, a head mounted display, a see through display, a wearable apparatus, a head worn apparatus, a hand worn apparatus, an electronic apparatus, a peripheral apparatus, a host apparatus, and/or the like. In at least one example embodiment, apparatuses communicate with each other. For example, an apparatus may be an apparatus that automatically communicates with another apparatus for purposes such as identifying the apparatus, synchronizing data, exchanging status information, and/or the like. In at least one example embodiment, an apparatus retains information associated with communication with a separate apparatus. For example, the apparatus may comprise information associated with identifying, communicating with, authenticating, performing authentication with, and/or the like, the separate apparatus. In this manner, the apparatus may be privileged to perform operations in conjunction with the separate apparatus that a different apparatus may lack the privilege to perform. For example, the apparatus may be privileged to access specific information that may be stored on the separate apparatus, cause the apparatus to perform one or more operations in response to a directive communicated to the separate apparatus, and/or the like.

In at least one example embodiment, communication based, at least in part, on short range communication is referred to as proximity-based communication. In at least one example embodiment, proximity-based communication relates to wireless communication that is associated with a short range, such as low power radio frequency communication, radio frequency communication, near field communication, inductive communication, electric field communication, Bluetooth communication, infrared communication, local area network communication, wireless local area network communication, local port communication, input/output port communication, and/or the like. In such an example, the exchange of information may be by way of the short range wireless communication between the apparatus and a separate apparatus, host apparatus, and/or the like.

In at least one example embodiment, a proximity-based communication channel is a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like. For example, as depicted in FIGURE 2, apparatus 202 communicates with apparatus 204 by way of a communication channel 212. In the example of FIGURE 2, communication channel 212 may be a low power radio frequency communication channel, a radio frequency communication channel, a near field communication channel, a wireless communication channel, a wireless local area network communication channel, a Bluetooth communication channel, an electric field communication channel, an inductive communication channel, an infrared communication channel, and/or the like.

In at least one example embodiment, an apparatus and a separate apparatus communicate by way of non-proximity-based communication channels. For example, as depicted in FIGURE 2, apparatus 202 communicates with apparatus 204 by way of communication channel 212. In the example of FIGURE 2, communication channel 212 may be a local area network communication channel, a wide area network communication channel, an internet communication channel, a cellular communication channel, and/or the like.

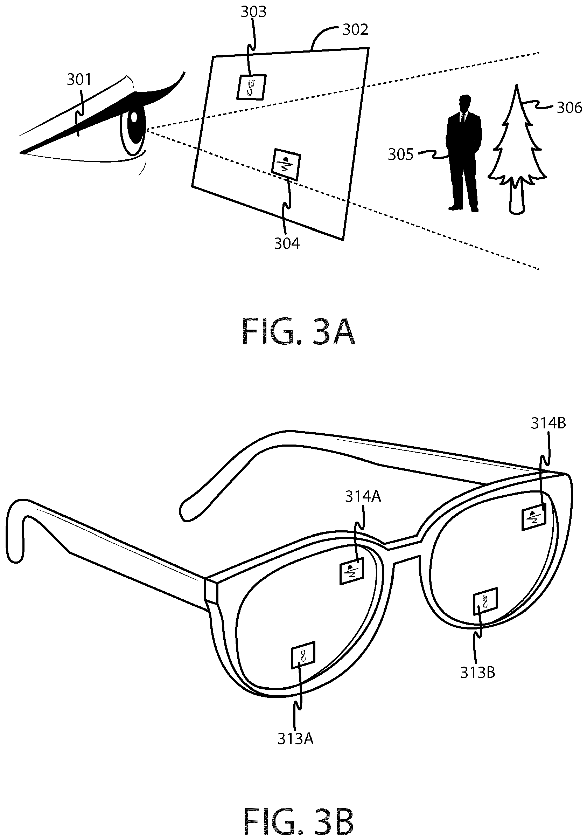

FIGURES 3A-3C are diagrams illustrating see through displays according to at least one example embodiment. The examples of FIGURES 3A-3C are merely examples and do not limit the scope of the claims. For example, configuration of the see through display may vary, relationship between the user and the see through display may vary, shape of the see through display may vary, opacity of the see through display may vary, and/or the like.

In modern times, electronic apparatuses are becoming more prevalent and pervasive. Users often utilize such apparatuses for a variety of purposes. For example, a user may utilize an apparatus to view information that is displayed on a display of the apparatus, to perceive information associated with the user's surroundings on the display of the apparatus, to perceive additional visual information associated with another apparatus, to create an expanded viewing region associated with another apparatus, and/or the like. In many circumstances, a user may desire to view information associated with an apparatus in a way that is non-invasive, non-intrusive, non-limiting, and/or the like. In such circumstances, it may be desirable for a display to be a see through display. In at least one example embodiment, a see through display is a display that presents information to a user, but through which objects on an opposite side of the display from the user may be seen. For example, an object on the opposite side of the display may be perceivable through the see through display. A see through display may be comprised by a window, a windshield, a visor, a pair of glasses, a head mounted display, and/or the like. In at least one example embodiment, an apparatus is a head mounted display. A head mounted display may, for example, be a display that is head mountable, a display that is coupled to an element that is wearable at a location on and/or proximate to the head of a user, a display that is wearable at a location on and/or proximate to the head of a user, and/or the like.

FIGURE 3A is a diagram illustrating see through display 302 according to at least one example embodiment. In at least one example embodiment, displaying information on a see through display so that the information corresponds with one or more objects viewable through the see through display is referred to as augmented reality. In the example of FIGURE 3A, user 301 may perceive objects 305 and 306 through see through display 302. In at least one example embodiment, the see through display may display information to the user. For example, display 302 may display information 303 and information 304. Information 303 and information 304 may be positioned on display 302 such that the information corresponds with one or more objects viewable through see through display 302, such as object 305. For example, information 304 may be displayed at a position on display 302 such that information 304 is aligned with a line of sight between user 301 and object 306. For example, user 301 may perceive information 304 to be overlapping object 306, to partially correspond with object 306 in the user's field of view through display 302, and/or the like. In such an example, information 303 may be associated with, identify, and/or the like, object 305. For example, information 303 may indicate an identity of object 305. In at least one example embodiment, display 302 may be comprised by a head mounted display.

FIGURE 3B is a diagram illustrating a see through display according to at least one example embodiment. In at least one example embodiment, a see through display is a near eye display. A near eye display may be a see through display that is positioned proximate to an eye of the user. The example of FIGURE 3B illustrates glasses that comprise a near eye display in each lens. In the example of FIGURE 3B, the right near eye display is displaying information 313A and 314A, and the left near eye display is displaying information 313B and 314B. When the glasses are worn by a user, the right near eye display may be a near eye display that is positioned proximate to the right eye of the user, and the left near eye display may be a near eye display that is positioned proximate to the left eye of the user. In at least one example embodiment, information 313A may be associated with information 313B. For example, the content of information 313A may be identical to content of information 313B. In some circumstances, even though the content may be identical between 313A and 313B, position of information 313A on the right near eye display may vary from position of information 313B on the left near eye display. In this manner, the apparatus may vary position of information between the left near eye display and right near eye display to vary the parallax of the information perceived by the user. In this manner, the apparatus may vary the perceived depth of the information by the user.

In many circumstances, a user of an electronic apparatus may desire to capture images, video, and/or the like, by way of a camera module. For example, the user may desire to capture an image of a landscape, to capture video of a performance, and/or the like. In at least one example embodiment, an apparatus comprises a camera module. The camera module may be configured such that the camera module may capture visual information within a capture region of the camera module.

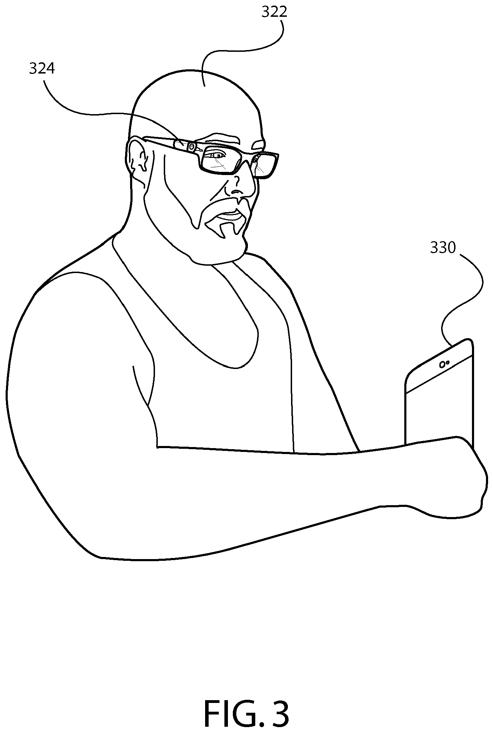

FIGURE 3C is a diagram illustrating a see through display according to at least one example embodiment. As depicted in the example of FIGURE 3C, user 322 is wearing head mounted display 324. Head mounted display 324 may be similar as described regarding FIGURE 3B. As discussed regarding the examples of FIGURES 3A-3B, in some circumstances, a user may utilize a see through display in conjunction with one or more apparatuses. For example, as depicted in the example of FIGURE 3C, user 322 is utilizing head mounted display 324 in conjunction with apparatus 330. In the example of FIGURE 3C, apparatus 330 may be a phone, a media player, a tablet, a personal data assistant, and/or the like.

As discussed previously, it may be desirable to display information on a see through display such that the information corresponds with one or more objects viewable through the see through display is referred to as augmented reality. In the example of FIGURE 3C, user 322 may perceive apparatus 330 through at least one see through display comprised by head mounted display 324. In the example of FIGURE 3C, information may be displayed by way of head mounted display 324 such that the information corresponds with one or more objects viewable through at least one see through display, such as apparatus 330. For example, the information may be displayed at a position on the see through display such that the information is aligned with a line of sight between user 322 and apparatus 330. For example, user 322 may perceive the information to be overlapping apparatus 330, to partially correspond with apparatus 330 in the user's field of view through head mounted display 324, to be adjacent to at least a portion of an edge of apparatus 330, to be visually proximate to at least a portion of apparatus 330, and/or the like. In such an example, the information may be associated with, identify, and/or the like, apparatus 330. In such an example, the information may be associated with a program being executed by apparatus 330, may be displayed such that the information appears to user 322 to extend a display comprised by apparatus 330, and/or the like.

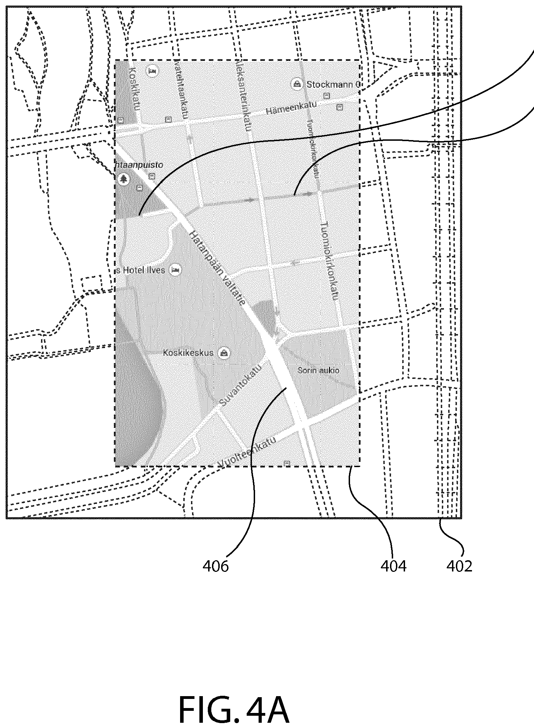

FIGURES 4A-4C are diagrams illustrating map information and supplemental map information according to at least one example embodiment. The examples of FIGURES 4A-4C are merely examples and do not limit the scope of the claims. For example, map information content may vary, supplemental map information content may vary, displayed portion of map information configuration may vary, and/or the like.

As electronic apparatuses become increasingly prevalent and pervasive in our society, users of electronics apparatuses increasingly depend on their electronic apparatuses to assist the users in various aspects of the users' lives. Many users rely on their electronic apparatus for purposes relating to mapping activities, navigational activities, and/or the like. For example, a user may utilize an electronic apparatus to view map information, to generate navigational information, and/or the like. As such, it may be desirable to configure an electronic apparatus such that the electronic apparatus facilitates various mapping activities in a manner that is unobtrusive and intuitive. In order to facilitate such interactions, it may be desirable to display map information such that a user of the apparatus may perceive the map information, interact with the map information, and/or the like. In at least one example embodiment, an apparatus causes display of map information on a display.

In some circumstances, a size of the map information may exceed a display size of the apparatus such that only a portion of the map information may be displayed on the display. In such circumstances, the apparatus may cause display of a portion of the map information on the display. In such an example, the portion of the map information caused to be displayed on the display may be referred to as the displayed portion of the map information. In such an example, the map information may comprise additional map information that fails to be comprised by the displayed portion of the map information. In at least one example embodiment, additional map information is map information that fails to be comprised by the displayed portion of the map information on the display.

In many circumstances, a user may desire to utilize map information to locate a particular location, to view a particular address, to facilitate determination of a route between a location and another location, and/or the like. As such, it may be desirable to utilize map information that indicates one or more traversable paths. A traversable path may, for example, be a path that is traversable by a vehicle, a bicycle, a pedestrian, and/or the like. For example, a traversable path may comprise at least one of a street, a road, a highway, a pathway, a trail, and/or the like. In many circumstances, a particular position within the map information may be of particular interest to the user. For example, a position within the map information may correspond with a building, an address, a geographical position, etc. that is indicated in the map information. For example, a map position associated with map information may indicate a particular position indicated by the map information, may be a position along a traversable path that is indicated by the map information, and/or the like.

FIGURE 4A is a diagram illustrating map information and supplemental map information according to at least one example embodiment. The example of FIGURE 4A depicts a displayed portion 404 of map information 402. As discussed early, in some circumstances, only a portion of map information may be perceivable by a user of an apparatus. In the example of FIGURE 4A, the displayed portion 404 is a portion of map information 402 that may be caused to be displayed on a display. As can be seen, map information 402 comprises additional map information that fails to be comprised by displayed portion 404. In the example of FIGURE 4A, displayed portion 404 of map information 402 indicates traversable paths 406, 407, and 408. As can be seen, each of traversable paths 406, 407, and 408 may be a street, a road, a highway, a pathway, a trail, and/or the like.

As discussed previously, in some circumstances, a user may desire to utilize map information for purposes relating to navigational activities. For example, a user may desire to perceive a route that directs the user from a location to another location. A route comprising a portion of at least one traversable path that directs a user from a location to another location may be referred to as a navigational route. In at least one example embodiment, a traversable path is a navigational route. In such an example embodiment, the navigational route may comprise information indicative of a route between a first location and a second location. The navigational route may, for example, be associated with at least a portion of one or more roads, streets, trails, highways, and/or the like.

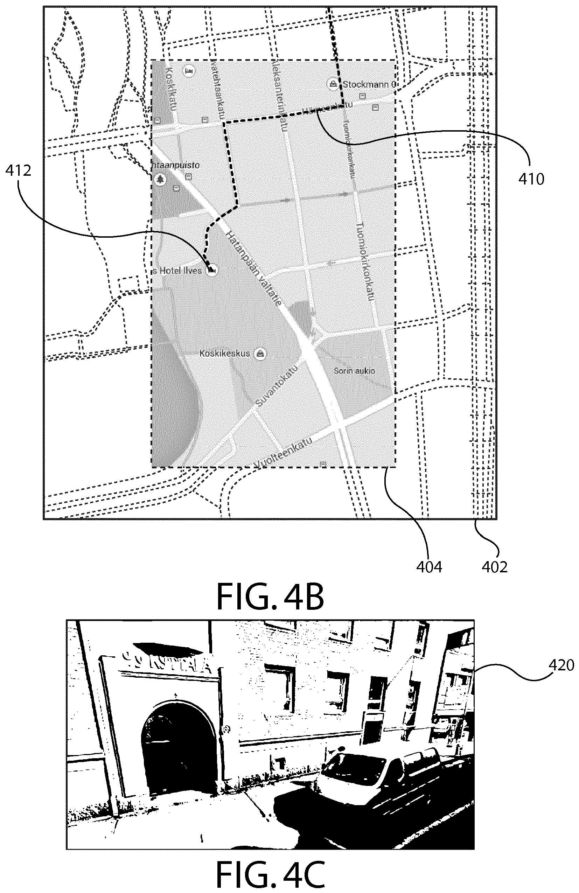

FIGURE 4B is a diagram illustrating map information and supplemental map information according to at least one example embodiment. The example of FIGURE 4B depicts a displayed portion 404 of map information 402, similar as described regarding the example of FIGURE 4A. In the example of FIGURE 4B, map information 402 comprises navigational route 410, which originates from map position 412. As can be seen, navigational route 410 begins at map position 412 and directs a user of the apparatus to navigate to a destination by way of the indicated roads, streets, trails, highways, and/or the like.

In some circumstances, a user may be unfamiliar with a particular region. For example, the user may utilize map information to view a particular address, but may be unfamiliar with the particular neighborhood, the façade of the building located at the particular address, and/or the like. As such, the user may desire to perceive and/or interact with information in addition to the map information. Such information may be referred to as supplemental map information. In at least one example embodiment, an apparatus is caused to display supplemental map information. In such an example embodiment, the supplemental map information may comprise a least one element associated with a particular map position that is absent from the map information. For example the supplemental map information may comprise information associated with traffic, weather, road conditions, construction status, and/or the like. In at least one example embodiment, the supplemental map information comprises visual information associated with the particular map position. For example, the supplemental map information may comprise photographs captured at the location indicated by the map position, may comprise two-dimensional and/or three-dimensional renderings of the location indicated by the map position, and/or the like. Such supplemental map information may be similar to Google Street View imagery, Bing Streetside imagery, and/or the like.

FIGURE 4C is a diagram illustrating map information and supplemental map information according to at least one example embodiment. The example of FIGURE 4C depicts supplemental map information 420. As can be seen, supplemental map information 420 comprises street-level imagery captured at a particular location. For example, the imagery depicted in the example of FIGURE 4C may have been captured at map position 412 in the example of FIGURE 4B. In this manner, a user of an apparatus may perceive supplemental map information that is associated with a particular location of interest, a map position along a traversable path, a map position along a navigational route, and/or the like.

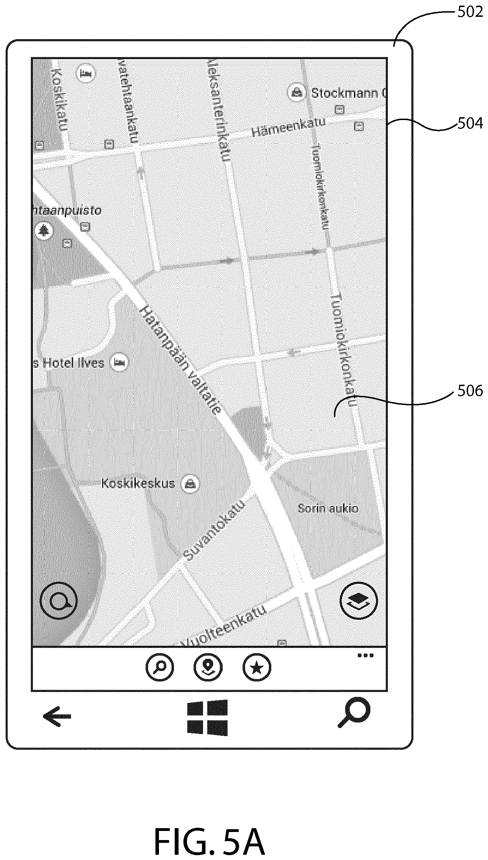

FIGURES 5A-5C are diagrams illustrating map information and supplemental map information according to at least one example embodiment. The examples of FIGURES 5A-5C are merely examples and do not limit the scope of the claims. For example, apparatus configuration may vary, supplemental map information content may vary, map information arrangement may vary, and/or the like.

In many circumstances, a user may desire to utilize map information to locate a particular location, to view a particular address, to facilitate determination of a route between a location and another location, and/or the like. FIGURE 5A is a diagram illustrating map information and supplemental map information according to at least one example embodiment. The example of FIGURE 5A depicts apparatus 502, which comprises display 504. Apparatus 502 may be a phone, a tablet, a personal data assistant, a computer, a laptop, and/or the like. In the example of FIGURE 5A, apparatus 502 is displaying map information 506 on display 504. As can be seen, map information 506 corresponds with displayed portion 404 of map information 402 of FIGURE 4A. In this manner, in the example of FIGURE 5A, map information 506 is a displayed portion of map information that comprises other map information in addition to map information 506.

As discussed previously, in many circumstances, a user may desire to utilize map information in conjunction with supplemental map information. For example, the user may desire to perceive supplemental map information that is associated with a particular map position, associated with a particular traversable path and/or navigational route, and/or the like. In such an example, the user may desire to perceive supplemental map information associated with a particular map position and, thus, desire to indicate the particular map position such that the supplemental map information is displayed. In at least one example embodiment, an apparatus receives information indicative of a display input at a display input position on the display. In such an example embodiment, the display input position may correspond with a map position. The map position may, for example, be a map position along a traversable path that is indicated by the displayed portion of the map information. In at least one example embodiment, the receipt of information indicative of the display input comprises receipt of information indicative of the display input at the display input position on the display, and determination that the display input position corresponds with the map position. In such an example embodiment, the determination that the display input position corresponds with the map position may comprise determination that a position of the display input position on the display corresponds with a position of the map position on the display.

A display input may, for example, be an input that corresponds with the display of the apparatus. For example, the display input may be a touch input, and the display may be a touch display. In such an example, receipt of information indicative of the display input may comprise receipt of information indicative of a touch input from the touch display. In another example, the display input may be a hover input, and the display input position may be a position on the display that is normal to the hover input. In such an example, receipt of information indicative of the display input may comprise receipt of information indicative of a hover input from at least one hover sensor. A hover sensor may, for example, be a proximity sensor, a motion sensor, a radar sensor, a light sensor, any other sensor configurable to detect a hover input, and/or the like.

In at least one example embodiment, the apparatus causes display of supplemental map information that comprises at least one element associated with the map position that is absent from the map information. For example, in response to the display input indicating the map position, the apparatus may cause display of supplemental map information associated with the indicated map position. In this manner, a user of the apparatus may perceive supplemental map information associated with the map position indicated by the user by way of the display input at the display input position.

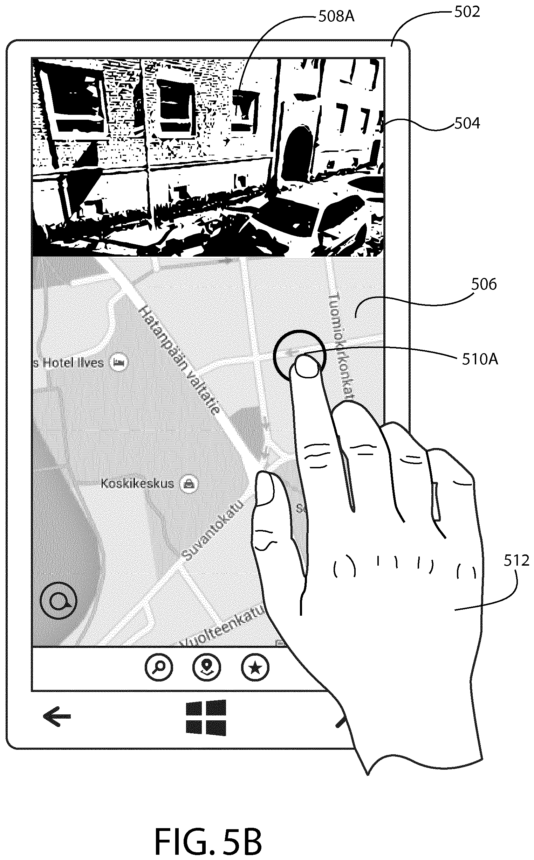

FIGURE 5B is a diagram illustrating map information and supplemental map information according to at least one example embodiment. The example of FIGURE 5B depicts apparatus 502, which comprises display 504. In the example of FIGURE 5B, apparatus 502 is displaying map information 506 on display 504. In the example of FIGURE 5B, apparatus 502, display 504, and map information 506 may be similar as described regarding the example of FIGURE 5A. As can be seen in the example of FIGURE 5B, user 512 indicates map position 510A by way of a display input at a display input position that corresponds with map position 510A. In response, the apparatus causes display of supplemental map information 508A. As can be seen, supplemental map information 508A overlays a portion of map information 506 in the example of FIGURE 5B. In some circumstances, the display of supplemental map information 506 may vary. For example, supplemental map information 506 may be displayed on a different portion of display 504, may be displayed on the entirety of display 504, and/or the like. In the example of FIGURE 5B, supplemental map information 508A comprises at least one element associated with map position 510A that is absent from map information 506. Namely, in the example of FIGURE 5B, supplemental map information 508A comprises street-level imagery that was captured at a location proximate to the location indicated by map position 510A. In this manner, user 512 may perceive supplemental map information 508A in relation to map information 506.

In many circumstances, a user may desire to view supplemental map information associated with a map position and, subsequently, desire to view other supplemental map information associated with another map position. For example, the user may desire to view street-level imagery captured at a particular location on a particular street and, subsequently, desire to view street-level imagery captured at a different location on the particular street, on a different road, and/or the like. In at least one example embodiment, an apparatus receives information indicative of a display input at a display input position that corresponds with a map position, and causes display of supplemental map information associated with the map position. In such an example embodiment, the apparatus may determine that the display input has moved to another display input position on the display. For example, the display input may be a touch input, and the user may slide a finger of the user across the display from a display input position that corresponds with a map position to another display input position that corresponds with another map position. In such an example, the other display input position may correspond with another map position along the traversable path that is indicated by the displayed portion of the map information. In response, the apparatus may cause display of other supplemental map information that comprises at least one element associated with the other map position that is absent from the map information. In such circumstances, the apparatus may cause termination of display of the supplemental map information based, at least in part, on the determination that the display input has moved to the other display input position. In this manner, the user may perceive the other supplemental map information associated with the other map position indicated by the user by way of the user moving the display input.

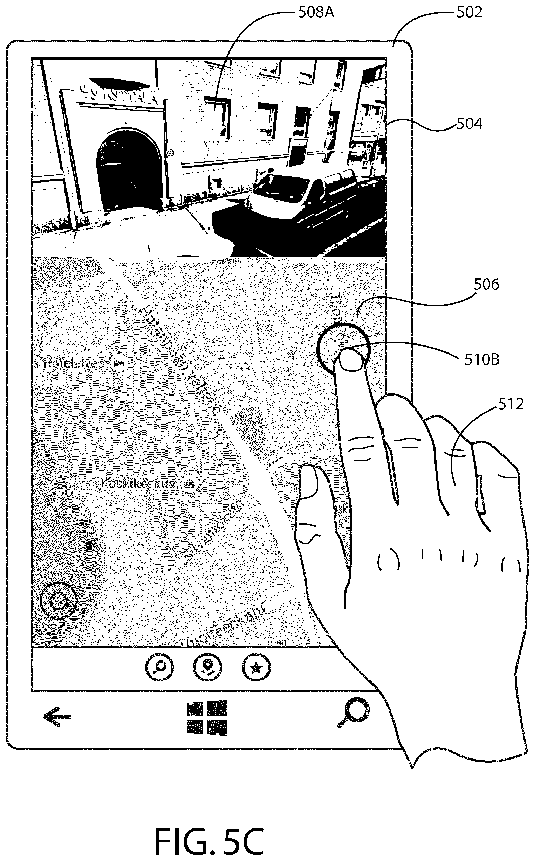

FIGURE 5C is a diagram illustrating map information and supplemental map information according to at least one example embodiment. The example of FIGURE 5C depicts apparatus 502, which comprises display 504. In the example of FIGURE 5C, apparatus 502 is displaying map information 506 on display 504. In the example of FIGURE 5C, apparatus 502, display 504, and map information 506 may be similar as described regarding the example of FIGURE 5A. As can be seen in the example of FIGURE 5C, user 512 indicates map position 510B by way of a display input at a display input position that corresponds with map position 510B. In response, the apparatus causes display of supplemental map information 508B. As can be seen, supplemental map information 508B overlays a portion of map information 506 in the example of FIGURE 5C. In some circumstances, the display of supplemental map information 506 may vary. For example, supplemental map information 506 may be displayed on a different portion of display 504, may be displayed on the entirety of display 504, and/or the like. In the example of FIGURE 5C, supplemental map information 508B comprises at least one element associated with map position 510B that is absent from map information 506. Namely, in the example of FIGURE 5C, supplemental map information 508B comprises street-level imagery that was captured at a location proximate to the location indicated by map position 510B. In this manner, user 512 may perceive supplemental map information 508B in relation to map information 506.

For example, FIGURE 5C may depict a state of apparatus 502 subsequent to user 512 dragging the user's finger from the display input position that corresponds with map position 510A in the example of FIGURE 5B, to the display input position that corresponds with map position 510B in the example of FIGURE 5C. In response, apparatus 502 may terminate display of supplemental map information 508A in the example of FIGURE 5B, and cause display of supplemental map information 508B in the example of FIGURE 5C. Similarly, FIGURE 5B may depict a state of apparatus 502 subsequent to user 512 dragging the user's finger from the display input position that corresponds with map position 510B in the example of FIGURE 5C, to the display input position that corresponds with map position 510A in the example of FIGURE 5B. In response, apparatus 502 may terminate display of supplemental map information 508B in the example of FIGURE 5C, and cause display of supplemental map information 508A in the example of FIGURE 5B. In at least one example embodiment, apparatus 502 causes display of various supplemental map information associated with various map positions located between map position 510A of FIGURE 5B and map position 510B of FIGURE 5C. In this manner, the apparatus may dynamically display supplemental map information as user 512 drags, hovers, etc. the user's finger from the display input position of FIGURE 5B to the display input position of FIGURE 5C, from the display input position of FIGURE 5C to the display input position of FIGURE 5B, and/or the like.

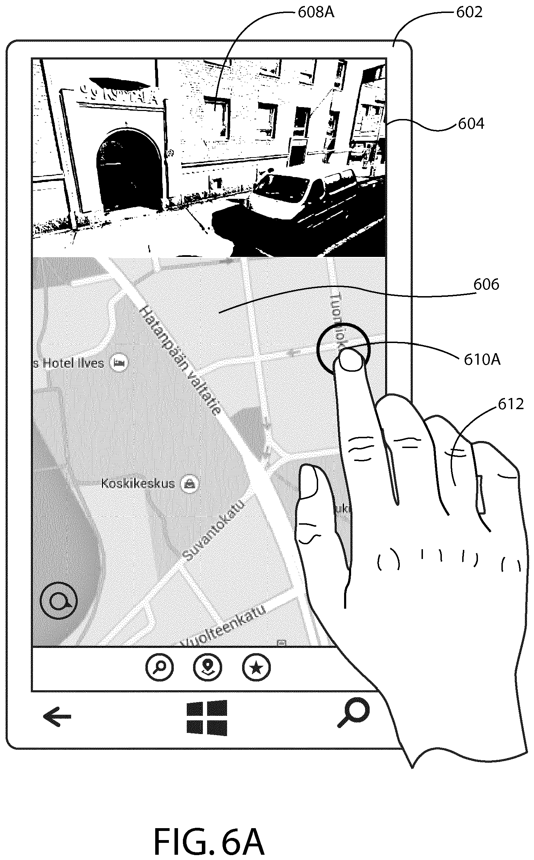

FIGURES 6A-6C are diagrams illustrating a display input and a non-display input according to at least one example embodiment. The examples of FIGURES 6A-6C are merely examples and do not limit the scope of the claims. For example, apparatus configuration may vary, additional map information arrangement and/or content may vary, supplemental map information content may vary, and/or the like.

FIGURE 6A is a diagram illustrating a display input according to at least one example embodiment. The example of FIGURE 6A depicts apparatus 602, which comprises display 604. In the example of FIGURE 6A, apparatus 602 is displaying map information 606 on display 604. In the example of FIGURE 6A, apparatus 602, display 604, and map information 606 may be similar as described regarding apparatus 502, display 504, and map information 506 in the example of FIGURE 5A. As can be seen in the example of FIGURE 6A, user 612 indicates map position 610A by way of a display input at a display input position that corresponds with map position 610A. In response, the apparatus causes display of supplemental map information 608A. As can be seen, supplemental map information 608A overlays a portion of map information 606 in the example of FIGURE 6A. In some circumstances, the display of supplemental map information 606 may vary. For example, supplemental map information 606 may be displayed on a different portion of display 604, may be displayed on the entirety of display 604, and/or the like. In the example of FIGURE 6A, supplemental map information 608A comprises at least one element associated with map position 610A that is absent from map information 606. Namely, in the example of FIGURE 6A, supplemental map information 608A comprises street-level imagery that was captured at a location proximate to the location indicated by map position 610A. In this manner, user 612 may perceive supplemental map information 608A in relation to map information 606.

As discussed previously, in many circumstances, a displayed portion of map information may be less than the entirety of the map information. For example, the displayed portion of the map information may comprise a miniscule portion of the entirety of the map information. As such, in many circumstances, a size of an apparatus and/or a display of an apparatus may limit the amount of map information comprised by the displayed portion of the map information. Further, the size of the display may limit the manners in which a user may interact with the map information, manipulate the map information, view the map information, view supplemental map information associated with one or more map positions within the map information, and/or the like. As can be seen in the example of FIGURE 6A, map position 610A is at an edge of display 604. In many circumstances, a user may desire to view supplemental map information associated with map positions that fail to be within the displayed portion of the map information. In such circumstances, the user may be forced to pan the map information such that a different portion of the map information is displayed on the display and, subsequently, indicate a particular map position by way of a display input at a display input position that corresponds with the map position. In such circumstances, it may be desirable to utilize augmented reality, similar as described regarding the examples of FIGURES 3A-3C.

For example, a user may desire to perceive map information in addition to the displayed portion of the map information that is perceivable by way of the display. In at least one example embodiment, an apparatus causes display of additional map information. In such an example embodiment, the additional map information may be map information that fails to be comprised by the displayed portion of the map information on the display. The causation of display of the additional map information may, for example, comprise sending the additional map information to a separate apparatus such that the separate apparatus is caused to display the additional map information. In such an example, the separate apparatus may be a head mounted display, a see-through display, a table top display, and/or the like. The head mount display and the see-through display may be similar as described regarding the examples of FIGURES 3A-3C. For example, a user may utilize the apparatus while utilizing a separate apparatus, such as a head mounted display, as depicted in the example of FIGURE 3C. In such an example, the additional map information may be caused to be displayed by the separate apparatus such that the additional map information is adjacent to at least a portion of the apparatus, adjacent to at least a portion of the display, adjacent to at least a portion of the displayed portion of the map information, and/or the like. In this manner, the additional map information may appear to the user to flow as a continuation of the displayed portion of the map information, to align with the displayed portion of the map information, and/or the like.

Similarly, a user may desire to perceive supplemental map information in addition to the displayed supplemental map information that is perceivable by way of the display of the apparatus. In at least one example embodiment, the additional map information caused to be displayed by the separate apparatus is additional supplemental map information. In such an example embodiment, the apparatus may cause display of additional supplemental map information. The additional supplemental map information may, for example, be supplemental map information that fails to be comprised by the displayed portion of the supplemental map information, the supplemental map information that is displayed on the display, and/or the like. The causation of display of the additional supplemental map information may, for example, comprise sending the additional supplemental map information to a separate apparatus such that the separate apparatus is caused to display the additional supplemental map information. In such an example, the separate apparatus may be a head mounted display, a see-through display, a table top display, and/or the like. The head mounted display and the see-through display may be similar as described regarding the examples of FIGURES 3A-3C. For example, a user may utilize the apparatus while utilizing a separate apparatus, such as a head mounted display, as depicted in the example of FIGURE 3C. In such an example, the additional supplemental map information may be caused to be displayed by the separate apparatus such that the additional supplemental map information is adjacent to at least a portion of the apparatus, adjacent to at least a portion of the display, adjacent to at least a portion of the supplemental map information displayed on the display of the apparatus, and/or the like. In this manner, the additional supplemental map information may appear to the user to flow as a continuation of the displayed supplemental map information, to align with the displayed supplemental map information, and/or the like.

In some circumstances, a user may desire to interact with additional map information that fails to be comprised by a portion of map information that is displayed on a display of an apparatus. For example, a traversable path indicated in the displayed portion of the map information may continue in a particular direction off of the display. In such an example, the user may desire to view supplemental map information that is associated with various map positions along the traversable path, including map positions within in the additional map information that fail to be displayed on the display. As such, it may be desirable to configure an apparatus such that a user may interact with map information that fails to be comprised by the displayed portion of the map information. For example, the additional map information may fail to be displayed, may be caused to be displayed by a separate apparatus, may be caused to be displayed by way of a head mounted display, and/or the like.

In order to effect such interaction, it may be desirable to configure an apparatus such that the apparatus may receive input that fails to be associated with a display of the apparatus, a portion of the apparatus, and/or the like. In at least one example embodiment, an apparatus receives information indicative of a non-display input at a non-display input position. In such an example embodiment, the non-display input may be an input that fails to correspond with the display, fails to correspond with any portion of the apparatus, corresponds with a bezel adjacent to an edge of the display, and/or the like. As such, the non-display input position may fail to correspond with a display input position, may correspond with a position on a bezel adjacent to an edge of the display, may correspond with a position in the space proximate to the apparatus, and/or the like. The receipt of information indicative of the non-display input at the non-display input position may, for example, comprise receipt of information indicative of an input implement at the non-display input position. In such an example, the input implement may be any implement that may be tracked by the apparatus, such as a finger, a hand, a ring, a wand, a stylus, and/or the like. For example, the input implement may be tracked by way of a camera, and information indicative of the input implement at the non-display input position may be received from a camera module. In another example, the input implement may be tracked by way of a sensor, and information indicative of the input implement at the non-display input position is received from the sensor. In such an example, the sensor may be a motion sensor, a proximity sensor, a radar sensor, a light sensor, and/or the like. In at least one example embodiment, the input implement is tracked by way of a trackable portion of the input implement. The trackable portion of the input implement may be a metal portion, a near field communication sensor, a fiducial marker, and/or the like. In yet another example, the sensor may be a motion sensor in a wrist worn apparatus of the user, such as a smart watch apparatus, a finger worn apparatus of the user, such as a ring apparatus, and/or the like. In such an example, the receipt of information indicative of a display input, a non-display input, etc. may comprise receipt of information from the motion sensor of the wrist worn apparatus, the finger worn apparatus, etc., and determination that the information indicates the display input, the non-display input, and/or the like.

In at least one example embodiment, the apparatus determines another map position along the traversable path based, at least in part, on the non-display input position. In such an example embodiment, the other map position may fail to correspond with the displayed portion of the map information. Subsequently, in such an example embodiment, the apparatus may cause display of other supplemental map information that comprises at least one element associated with the other map position that is absent from the map information. In this manner, the user may begin to interact with the map information by way of a display input such that supplemental map information is caused to be displayed and, while moving the display input, reach an edge of the display and continue to interact with the map information by way of a non-display input. For example, as discussed previously, a traversable path indicated in the displayed portion of the map information may continue in a particular direction off of the display. In such an example, the user may desire to view supplemental map information that is associated with various map positions along the traversable path. As such, the user may transition from moving a display input in a direction that corresponds with the direction of the traversable path such that supplemental map information associated with the various map positions along the traversable path is caused to be displayed, to moving a non-display input in the same direction. In this manner, the user may intuitively continue a similar input in order to facilitate continued viewing of the supplemental map information associated with the various map positions along the traversable path, both those map positions within the displayed portion of the map information and those map positions that fail to be within the displayed portion of the map information.

In at least one example embodiment, a non-display input is in a direction from an edge of the display that corresponds with a direction of the traversable path at the edge of the display. In such an example embodiment, the apparatus may determine that the user intends to continue interacting the map information in a manner that causes the supplemental map information to be displayed. In some circumstances, it may be desirable to avoid such continued interaction, for example, if the user does not intend to continue interacting with the map information, in order to avoid responding to accidental and/or unintentional movements and/or user actions, and/or the like. In at least one example embodiment, an apparatus receives a non-display input at a non-display input position, and determines that the non-display input is in a direction from the edge of the display that fails to correspond with the direction of the traversable path at the edge of the display. In such an example embodiment, the apparatus may preclude determination of supplemental map information, preclude causation of display of a supplemental map information, and/or the like based, at least in part, on the determination that the non-display input is in a direction from the edge of the display that fails to correspond with the direction of the traversable path at the edge of the display.

In some circumstances, a traversable path may curve, turn, and/or the like within the additional map information that fails to be comprised by the displayed portion of the map information. In such an example, the user may desire to continue to interact with the map information despite the direction of the non-display input failing to correspond with a direction of the traversable path at the edge of the display. In such an example, the non-display input position may nonetheless correspond with the traversable path as indicated in the additional map information. In at least one example embodiment, an apparatus determines that a non-display input corresponds with a map position along the traversable path, and causes display of supplemental map information based, at least in part, on the determination that the non-display input corresponds with the map position along the traversable path. In other circumstances, it may be desirable to allow a user to continue to interact with the map information notwithstanding any direction associated with the non-display input. In at least one example embodiment, an apparatus receives a non-display input at a non-display input position, and causes display of supplemental map information absent determination of a direction of the non-display input from the edge of the display.

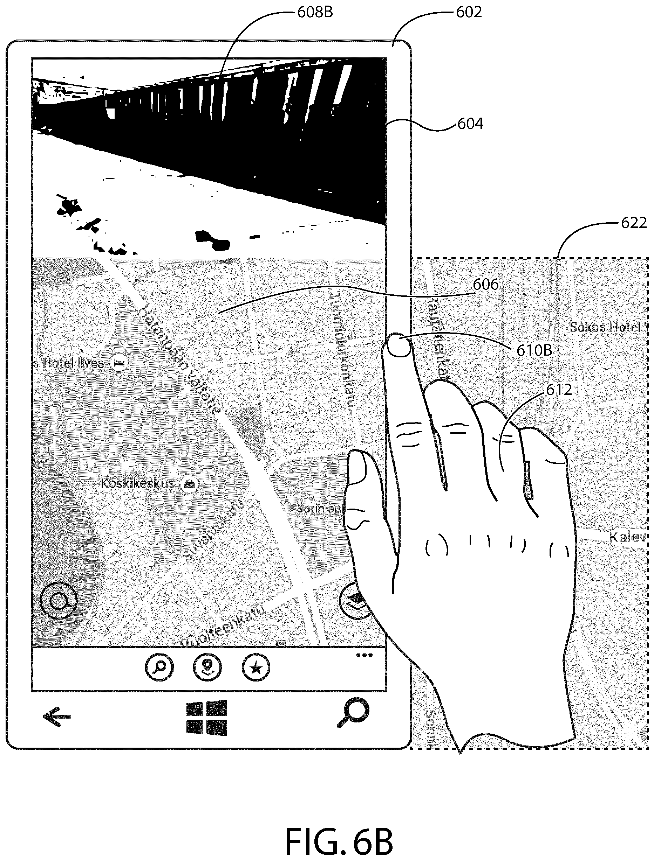

FIGURE 6B is a diagram illustrating a non-display input according to at least one example embodiment. The example of FIGURE 6B depicts apparatus 602, which comprises display 604. In the example of FIGURE 6B, apparatus 602 is displaying map information 606 on display 604. In the example of FIGURE 6B, apparatus 602, display 604, and map information 606 may be similar as described regarding the example of FIGURE 6A. As can be seen, the example of FIGURE 6B also depicts additional map information 622, shown to be adjacent to at least a portion of apparatus 602. As such, FIGURE 6B may depict the perception of user 322 in the example of FIGURE 3C. For example, map information 622 may be map information caused to be displayed by a separate apparatus, such as head mounted display 324 of FIGURE 3C, may be map information that fails to be displayed, and/or the like. As can be seen, user 612 may continue the display input of FIGURE 6A such that user 612 initiates a non-display input at non-display input position 610B that corresponds with a position on a bezel of apparatus 602. In this manner, user 612 may continue to interact with the map information and cause display of various supplemental map information that is associated with various map positions along a traversable route. For example, apparatus 602 may determine a map position that corresponds with non-display input position 610B, and cause display of supplemental map information 608B that is associated with the map position. As can be seen, user 612 continues in the direction of the traversable path, off the edge of display 604 and onto the bezel of apparatus 602.

In some circumstances, it may be desirable to provide indications that facilitate a user's interaction with map information, additional map information, supplemental map information, and/or the like. For example, in circumstances in which the additional map information fails to be displayed, it may be desirable to provide feedback to a user. The feedback may, for example, indicate certain characteristics of the traversable path within the additional map information, certain physical aspects of the traversable path that may not be readily discernible by the user by way of the displayed portion of the traversable path within the displayed portion of the map information, and/or the like. In at least one example embodiment, an apparatus determines that a map position corresponds with a predetermined portion of the traversable path. For example, the map position may be a map position within the additional map information, which may be displayed by a separate apparatus, fail to be displayed, and/or the like. The predetermined portion of the traversable path may be an intersection of the traversable path with another traversable path, the termination of the traversable path, a turn and/or a bend in the traversable path, and/or the like. In such an example embodiment, the apparatus may cause actuation of an indication based, at least in part, on the determination that the map position corresponds with the predetermined portion of the traversable path. The indication may be any indication that facilitates the user's comprehension of the traversable path within the additional map information. For example, the indication may be a non-visual indication, such as an audible indication, a tactile indication, and/or the like. In another example, the indication may be a visual indication, such as a visual indication displayed by way of the display of the apparatus, caused to be displayed by a separate apparatus, and/or the like. For example, the indication may alert the user that the traversable path the user was interacting with terminates, turns sharply, and/or the like, such that the user may accommodate the changing traversable path, may discontinue interacting with the additional map information, may change directions to continue interacting with the traversable path, and/or the like.

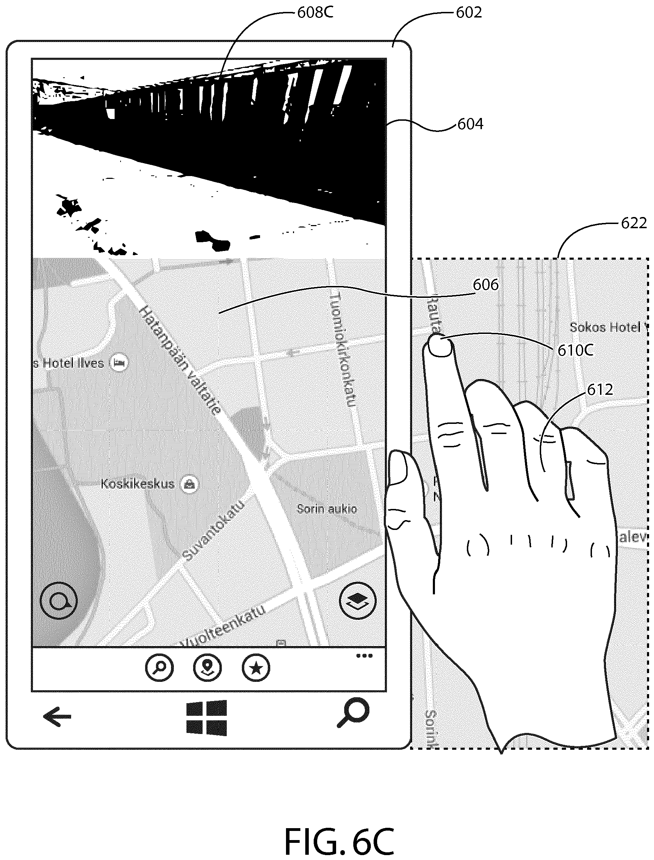

FIGURE 6C is a diagram illustrating a non-display input according to at least one example embodiment. The example of FIGURE 6C depicts apparatus 602, which comprises display 604. In the example of FIGURE 6C, apparatus 602 is displaying map information 606 on display 604. In the example of FIGURE 6B, apparatus 602, display 604, and map information 606 may be similar as described regarding the example of FIGURE 6A. As can be seen, the example of FIGURE 6C also depicts additional map information 622, similar as described regarding the example of FIGURE 6B. As can be seen, user 612 may continue the non-display input of FIGURE 6B such that the non-display input has moved to indicate map position 610C within additional map information 622. In this manner, user 612 may continue to interact with the map information and cause display of various supplemental map information that is associated with various map positions along the traversable route. As can be seen in the example of FIGURE 6C, map position 610C is associated with the termination of the traversable path that the user followed in the sequence of interaction states depicted in the examples of FIGURES 6A-6C. In the example of FIGURE 6C, apparatus 602 may determine that map position 610C corresponds with a predetermined portion of the traversable path and, in response, may cause actuation of an indication based, at least in part, on the determination that map position 610C corresponds with the predetermined portion of the traversable path. As discussed previously, the indication may be a non-visual indication, such as an audible indication, a tactile indication, etc., a visual indication, such as a visual indication displayed on display 604, displayed by way of a separate apparatus, etc., and/or the like.

As discussed previously, in some circumstances, it may be desirable to avoid such continued interaction, for example, if the user does not intend to continue interacting with the map information, in order to avoid responding to accidental and/or unintentional movements and/or user actions, and/or the like. For example, if a detected non-display input fails to be coplanar with a display of an apparatus, the non-display input may be unintentional, may be accidental, may fail to be a non-display input, and/or the like. In at least one example embodiment, prior to the determination of a map position along a traversable path, an apparatus determines that a non-display input is substantially coplanar with the display. In such an example embodiment, the determination of a map position along a traversable path may be based, at least in part, on the determination that the non-display input is substantially coplanar with the display. In at least one example embodiment, the determination that the non-display input is substantially coplanar with the display comprises determination that the non-display input is coplanar with the display within a coplanar tolerance. For example, the apparatus may determine that the first non-display input position is at a depth that is substantially coplanar with the plane of the display. The coplanar tolerance may, for example be a maximum offset between a plane of the display and the non-display input, the non-display input position, a depth of the non-display input, and/or the like. For example, the apparatus may determine, prior to the determination of a map position along a traversable path, that a non-display input fails to be substantially coplanar with the display. In such an example, the apparatus may preclude determination of a map position along the traversable path, preclude causation of display of supplemental map information in response to the non-display input, and/or the like based, at least in part, on the determination that the non-display input fails to be substantially coplanar with the display. In such an example embodiment, the determination that the non-display input fails to be substantially coplanar with the display may comprise determination that the non-display input fails to be coplanar with the display within a coplanar tolerance, determination that the non-display input position is at a depth that fails to be substantially coplanar with the plane of the display, and/or the like.

It can be seen in the examples of FIGURES 6A-6C that the non-display input fails to comprise a key press, a button press, and/or the like.

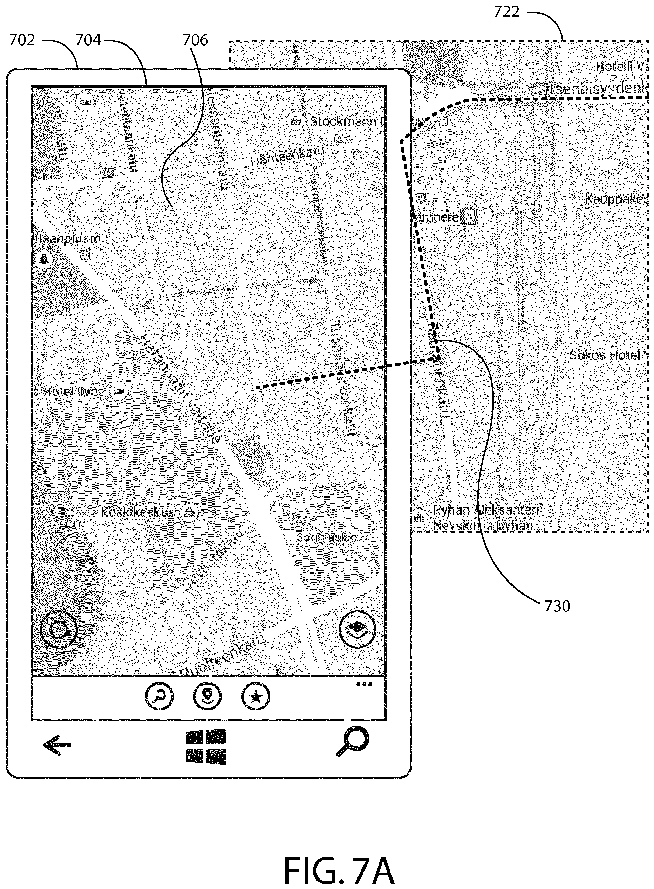

FIGURES 7A-7D are diagrams illustrating a navigational route according to at least one example embodiment. The examples of FIGURES 7A-7D are merely examples and do not limit the scope of the claims. For example, apparatus configuration may vary, additional map information arrangement and/or configuration may vary, navigational route configuration may vary, and/or the like.

As discussed previously, in some circumstances, a user may desire to utilize map information for purposes relating to navigational activities. For example, a user may desire to perceive a route that directs the user from a location to another location. In at least one example embodiment, a traversable path is a navigational route. In such an example embodiment, the navigational route may comprise information indicative of a route between a first location and a second location. The navigational route may, for example, be associated with at least a portion of one or more roads, streets, trails, highways, and/or the like.

FIGURE 7A is a diagram illustrating a navigational route according to at least one example embodiment. The example of FIGURE 7A depicts apparatus 702, which comprises display 704. In the example of FIGURE 7A, apparatus 702 is displaying map information 706 on display 704. Apparatus 702, display 704, and map information 706 may be similar as described regarding apparatus 502, display 504, and map information 506 of FIGURE 5A, respectively. As can be seen, FIGURE 7A also depicts additional map information 722. Additional map information 722 may be similar as described regarding additional map information 622 of FIGURE 6B. Additionally, FIGURE 7A depicts navigational route 730 spanning from map information 706 to additional map information 722. Navigational route 730 may be similar as described regarding navigational route 410 of FIGURE 4B.

As previously described, in some circumstances, a user may desire to view various supplemental map information associated with map positions along a navigation route. For example, viewing such supplemental map information may assist the user in navigating the navigational route, may provide the user with visual landmarks along the navigation route, may assist the user in locating a particular location along the navigational route, and/or the like.

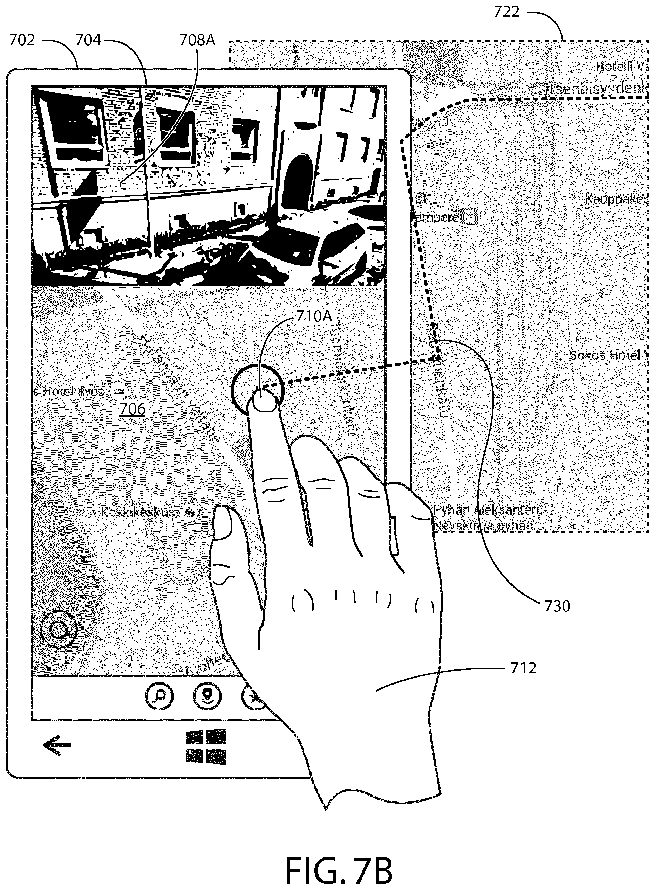

FIGURE 7B is a diagram illustrating a navigational route according to at least one example embodiment. The example of FIGURE 7B depicts apparatus 702, which comprises display 704. In the example of FIGURE 7B, apparatus 702 is displaying map information 706 on display 704. Apparatus 702, display 704, and map information 706 may be similar as described regarding the example of FIGURE 7A. As can be seen, FIGURE 7B also depicts additional map information 722 and navigational route 730, similar as described regarding the example of FIGURE 7A. As such, the example of FIGURE 7B may correspond with the example of FIGURE 7A subsequent to receipt of a display input at a display input position that corresponds with map position 710A in map information 706. In response to receipt of the display input and the determination of map position 710A, in the example of FIGURE 7B, apparatus 702 caused display of supplemental map information 708A. In this manner, user 712 may perceive supplemental map information 708A, which is associated with map position 710A.

As discussed previously, a user may continue to move a non-display input such that the non-display input continues in a direction from an edge of the display that corresponds with a direction of a traversable path, a navigational route, etc. at the edge of the display. In such circumstances, the apparatus may dynamically display supplemental map information associated with one or more map positions along the traversable path, the navigational route, etc.

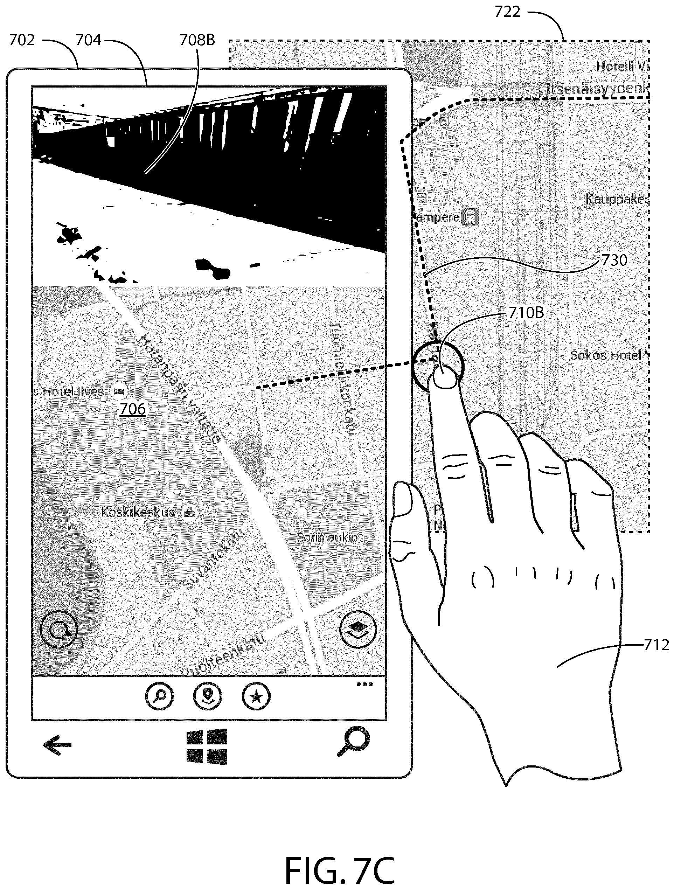

FIGURE 7C is a diagram illustrating a navigational route according to at least one example embodiment. The example of FIGURE 7C depicts apparatus 702, which comprises display 704. In the example of FIGURE 7C, apparatus 702 is displaying map information 706 on display 704. Apparatus 702, display 704, and map information 706 may be similar as described regarding the example of FIGURE 7B. As can be seen, FIGURE 7C also depicts additional map information 722 and navigational route 730, similar as described regarding the example of FIGURE 7B. As such, the example of FIGURE 7C may correspond with the example of FIGURE 7B subsequent to receipt of a non-display input at a non-display input position that corresponds with map position 710B in additional map information 722. In response to receipt of the non-display input and the determination of map position 710B, in the example of FIGURE 7C, apparatus 702 caused display of supplemental map information 708B. In this manner, user 712 may perceive supplemental map information 708B, which is associated with map position 710B.

As can be seen in the example of FIGURE 7C, map position 710B is at a corner of navigational route 730. In other words, the direction of navigational route relative to the edge of display 704 changes at map position 710B along navigational route 730. In circumstances such as these, it may be desirable to provide a user with an intuitive and responsive manner in which to interact with a navigational route comprised, at least in part, by additional map information. For example, it may be desirable to allow a user to continue to interact with the map information and/or the supplemental map information by way of moving a non-display input in the direction of the navigational route at the edge of the display notwithstanding a change in direction within the navigational route.

In at least one example embodiment, an apparatus determines a physical distance of a non-display input position from an edge of a display. The determination of the physical distance may, for example, comprise determination of a physical course followed by an input implement, and determination of the physical distance along the physical course from the edge of the display to the first non-display input position. For example, the input implement may be a finger, and the physical course followed by the finger may be a wavy line, an arc, and/or the like. In such an example, the physical distance may be a length of the wavy line, a length of the arc, and/or the like. In such an example embodiment, the apparatus may determine a navigational distance along the navigational route based, at least in part, on the physical distance and scale information associated with the map information. The navigational distance may be a distance relative to the navigational route. For example, the navigational distance may be a distance along the navigational route from the edge of the display, from the map position at which the navigational route changes direction, and/or the like. The scale information may, for example, be information indicative of a scale associated with the displayed portion of the map information. In such an example, in order to provide a user with a predictable input, it may be desirable to match the scale of the navigational distance with the scale of the displayed portion of the map information. The scale information may be received from memory, from a separate apparatus, such as a server, a mapping service, etc., and/or the like. In such an example embodiment, the apparatus may identify a third map position along the navigational route that corresponds with an edge of the displayed portion of the map information, the edge of the displayed portion of the map information corresponding with the edge of the display, and determine another map position to be a map position along the navigational route that is the navigational distance along the navigational route from the map position.

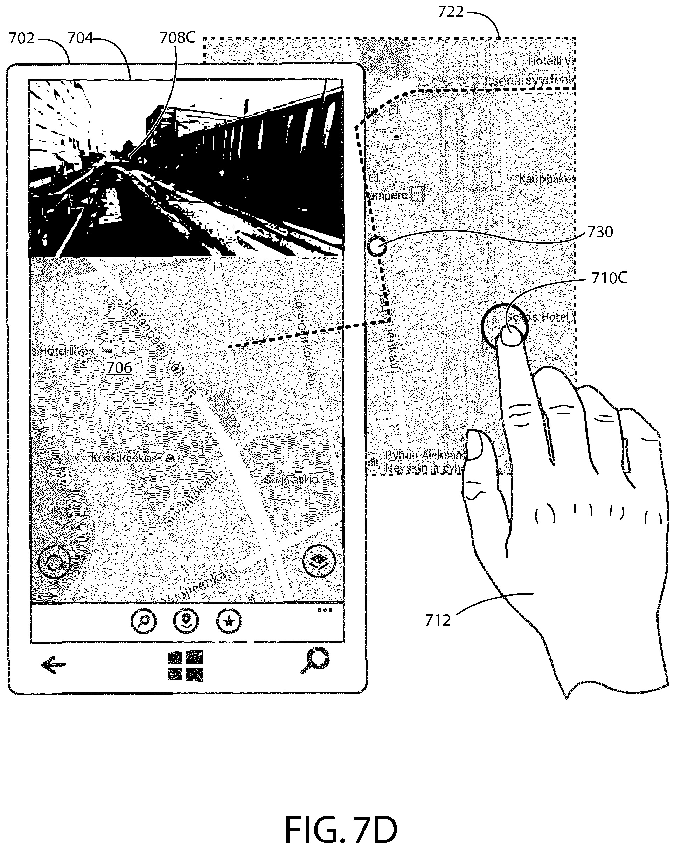

FIGURE 7D is a diagram illustrating a navigational route according to at least one example embodiment. The example of FIGURE 7D depicts apparatus 702, display 704, map information 706, additional map information 722, navigational route 730, and user 712, similar as described regarding the example of FIGURE 7C. As can be seen in the example of FIGURE 7D, user 712 continued to move the non-display input, in the direction of navigational route 730 at the edge of display 704, to non-display input position 710C. As can be seen, the map position that corresponds with non-display input position 710C fails to be a map position along navigational route 730. However, user 712 may nonetheless desire to continue interacting with various map positions along navigational route 730, to cause display of supplemental map information associated with the various map positions along navigational route 730, and/or the like. In the example of FIGURE 7D, additional map information 722 may not be perceivable by user 712, and user 712 may not be familiar with the various contours and/or direction changes of navigational route 730 within additional map information 722. As such, it may be desirable to configure apparatus 702 such that user 712 may continue to move a non-display input in the direction of navigational route 730 at the edge of display 704, and cause display of various supplemental map information associated with map positions along navigational route 730.

In the example of FIGURE 7D, apparatus 702 determined a physical distance between a map position along the navigational route at the edge of the display and non-display input position 710C, and determined a navigational distance along navigational route 730 based, at least in part, on the physical distance and scale information associated with map information 706. As can be seen, apparatus 702 determined the map position indicated by user 712 by way of the non-display input at non-display input position 710C to be map position 740 along navigational route 730. In this manner, map position 740 is a map position along navigational route 730 that is the navigational distance from the map position along navigational route 730 at the edge of display 704. In this manner, for example, user 712 may move the non-display input further to the right and, in response, the apparatus may cause display of supplemental map information associated with a map position that is further along navigational route 730 that map position 740 along navigational route 730. In another example, user 712 may move the non-display input further to the left and, in response, the apparatus may cause display of supplemental map information associated with a map position that is prior to map position 740 along navigational route 730.

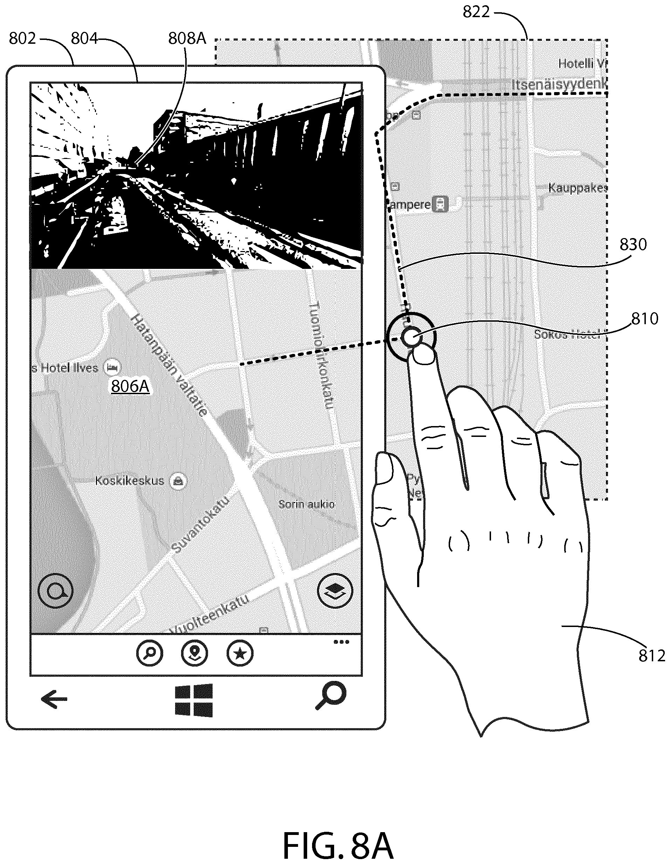

FIGURES 8A-8B are diagrams illustrating a non-display selection input according to at least one example embodiment. The examples of FIGURES 8A-8B are merely examples and do not limit the scope of the claims. For example, apparatus configuration may vary, additional map information configuration and/or arrangement may vary, map information content may vary, and/or the like.

In some circumstances, a user interacting with additional map information by way of a non-display input may desire to view the additional map information by way of the a display comprised by the user's apparatus. For example, the user may desire to pan the map information such that the displayed portion of the map information is changed to another portion of the map information. In at least one example embodiment, an apparatus receives information indicative of a non-display selection input at a non-display input position. The non-display selection input may, for example, be a tap gesture, a double tap gesture, a predefined gesture, a predetermined input, and/or the like. In such an example embodiment, the apparatus may determine a different portion of the map information based, at least in part, on the non-display input position, and cause display of the different portion of the map information in response to the non-display selection input. For example, the apparatus may cause display of a different portion of the map information such that the map position that corresponded with the non-display input position is displayed on the display, is displayed such that the map position is centered within the display, within a particular region of the display, and/or the like. In this matter, at least a portion of the additional map information may be caused to be displayed on the display. In at least one example embodiment, the apparatus causes termination of display of the displayed portion of the map information based, at least in part, on the non-display selection input, the determination of the different portion of the map information, the causation of display of the different portion of the map information, and/or the like.

FIGURE 8A is a diagram illustrating a non-display selection input according to at least one example embodiment. The example of FIGURE 8A depicts apparatus 802, display 804, map information 806A, additional map information 822, supplemental map information 808A, and navigational route 830, similar as described regarding apparatus 702, display 704, map information 706, additional map information 722, supplemental map information 708B, and navigational route 730 of FIGURE 7C, respectively. In the example of FIGURE 8A, user 812 may desire to cause display of a different portion of the map information that comprises map information 806A and additional map information 822. As such, in the example of FIGURE 8A, user 812 performs a non-display selection input at map position 810, which is a map position comprised by additional map information 822.

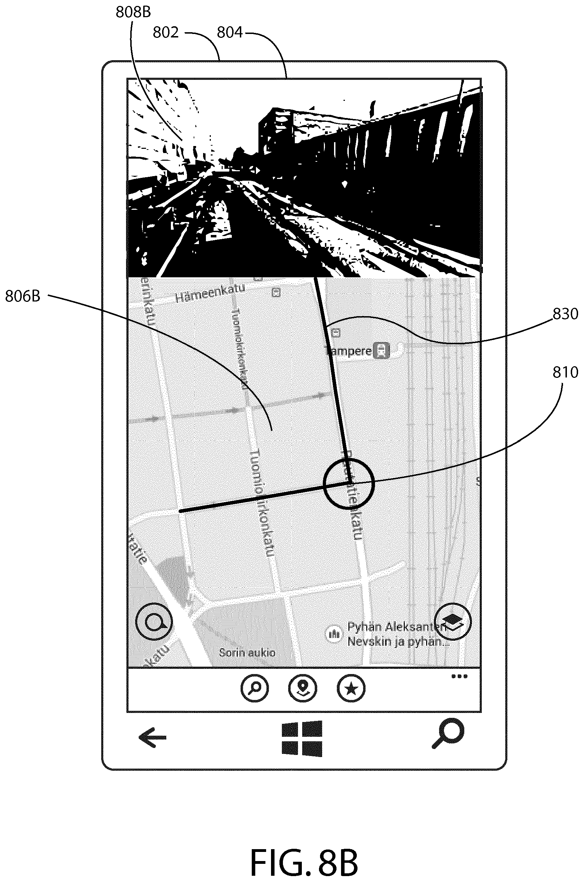

FIGURE 8B is a diagram illustrating a non-display selection input according to at least one example embodiment. The example of FIGURE 8B depicts a state of apparatus 802 subsequent to receipt of the non-display selection input at map position 810. As can be seen, apparatus 802 was caused to display a different portion of the map information, map information 806B. As illustrated, in response to the non-display selection input, map position 810 is now displayed on display 804.

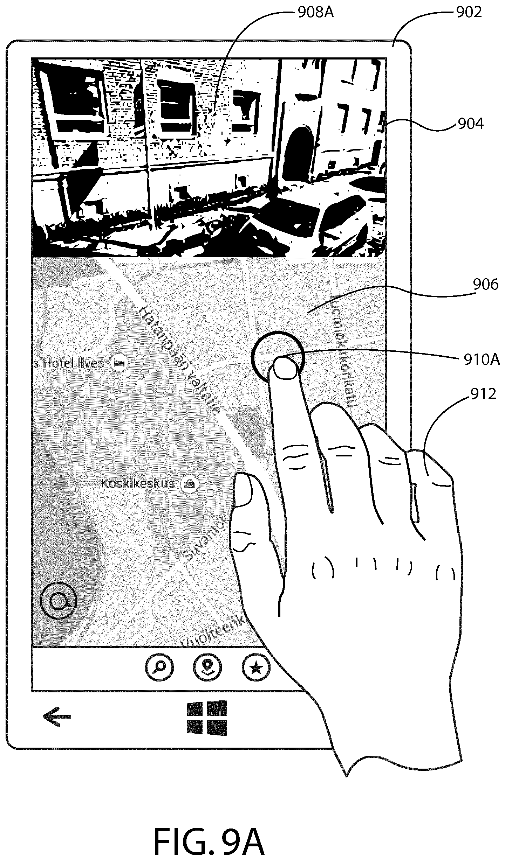

FIGURES 9A-9B are diagrams illustrating a display input and a non-display input according to at least one example embodiment. The examples of FIGURES 9A-9B are merely examples and do not limit the scope of the claims. For example, apparatus configuration may vary, additional map information arrangement and/or configuration may vary, map information content may vary, and/or the like.

In some circumstances, a user may desire to avoid causing display of additional map information by a separate apparatus when the user is interacting with map information that is currently displayed on the display of an apparatus. For example, the user may desire to avoid distractions that may be associated with viewing the additional map information if the map information the user desires to view and/or interact with is within the displayed portion of the map information.

FIGURE 9A is a diagram illustrating a display input and a non-display input according to at least one example embodiment. The example of FIGURE 9A depicts apparatus 902, display 904, map information 906, supplemental map information 908A, user 912, and map position 910A, similar as described regarding 502, display 504, map information 506, supplemental map information 508A, user 512, and map position 510A of FIGURE 5B. As can be seen, user 912 is interacting with map information 906 by way of a display input. In this manner, the user is interacting with the displayed portion of the map information, and may desire to avoid causation of display of additional map information by way of a separate apparatus.

In such circumstances, if the user does desire to interact with map information that fails to be comprised by the displayed portion of the map information, the user may desire to cause display of at least a portion of the additional map information. For example, the user may desire to cause display of a portion of the additional map information that is proximate to the map position that corresponds with a non-display input position of the non-display input.

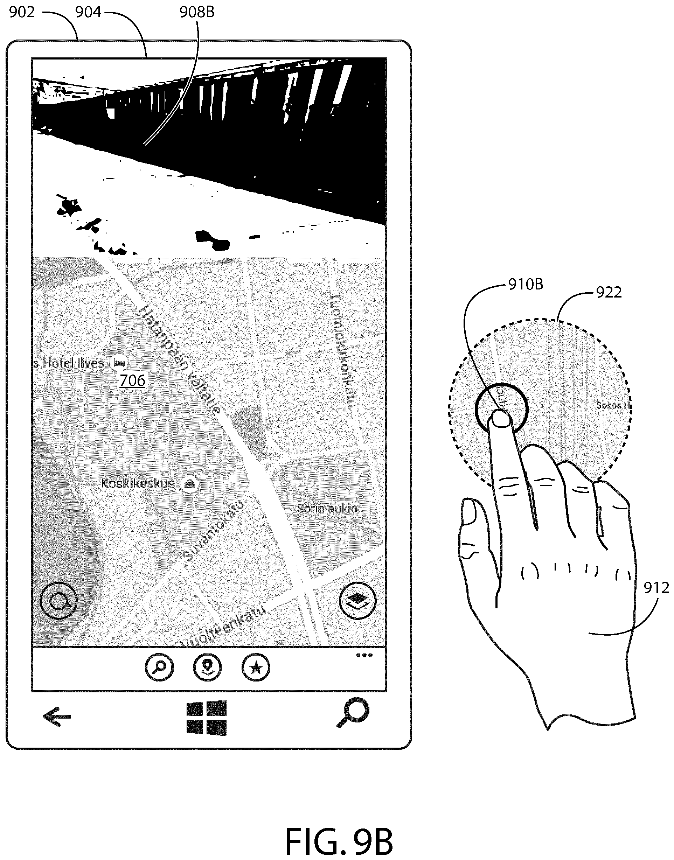

FIGURE 9B is a diagram illustrating a display input and a non-display input according to at least one example embodiment. As can be seen, the example of FIGURE 9B corresponds with the example of FIGURE 9A subsequent to receipt of the non-display input at the non-display input position that corresponds with map position 910B within additional map data 922. As can be seen, additional map data 922 is depicted as a circular region of map data surrounding map position 910B, proximate to map position 910, and/or the like. In this manner, FIGURE 9B may depict the perception of user 322 in the example of FIGURE 3C. For example, map information 922 may be map information caused to be displayed by a separate apparatus, such as head mounted display 324 of FIGURE 3C. In this manner, user 322 may perceive at least a portion of the additional map information that fails to be displayed on display 904, such as additional map data 922.

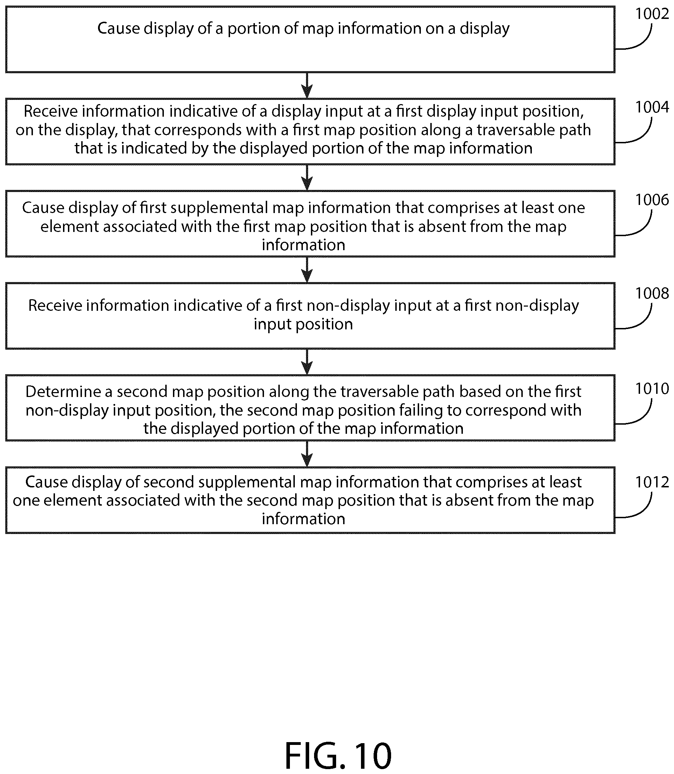

FIGURE 10 is a flow diagram illustrating activities associated with causation of display of supplemental map information according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE .

At block 1002, the apparatus causes display of a portion of map information on a display. The causation of display, the display, the map information, and the portion of map information may be similar as described regarding FIGURE 2, FIGURES 4A-4C, and FIGURES 5A-5C.

At block 1004, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1006, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1008, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1010, the apparatus determines a second map position along the traversable path based, at least in part, on the first non-display input position. In at least one example embodiment, the second map position fails to correspond with the displayed portion of the map information. The determination and the second map position may be similar as described regarding FIGURES 5A-5C, FIGURES 6A-6C, FIGURES 7A-7D, FIGURES 8A-8B, and FIGURES 9A-9B.

At block 1012, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

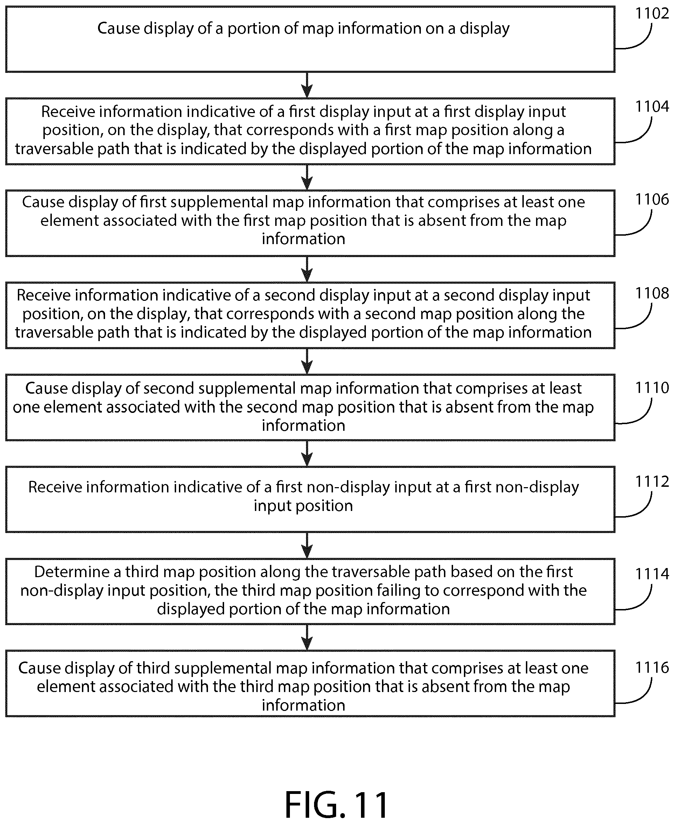

FIGURE 11 is a flow diagram illustrating activities associated with causation of display of supplemental map information according to at least one example embodiment. In at least one example embodiment, there is a set of operations that corresponds with the activities of FIGURE 11. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 11.

As discussed previously, in many circumstances, it may be desirable to track a display input across a display and, in response, dynamically cause display of supplemental map information associated with a map position that corresponds with a display input position of the display input.

At block 1102, the apparatus causes display of a portion of map information on a display. The causation of display, the display, the map information, and the portion of map information may be similar as described regarding FIGURE 2, FIGURES 4A-4C, and FIGURES 5A-5C.

At block 1104, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1106, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1108, the apparatus receives information indicative of a second display input at a second display input position, on the display, that corresponds with a second map position along a traversable path that is indicated by the displayed portion of the map information. The receipt, the second display input, the second display input position, the second map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1110, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1112, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1114, the apparatus determines a third map position along the traversable path based, at least in part, on the first non-display input position. In at least one example embodiment, the third map position fails to correspond with the displayed portion of the map information. The determination and the third map position may be similar as described regarding FIGURES 5A-5C, FIGURES 6A-6C, FIGURES 7A-7D, FIGURES 8A-8B, and FIGURES 9A-9B.

At block 1116, the apparatus causes display of third supplemental map information that comprises at least one element associated with the third map position that is absent from the map information. The causation of display, the third supplemental map information, and the at least one element associated with the third map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

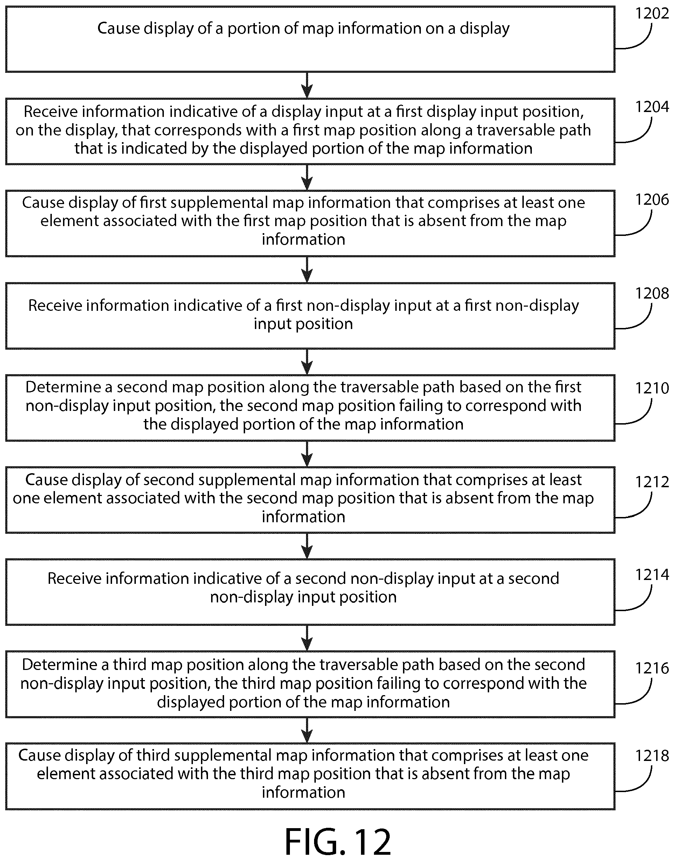

FIGURE 12 is a flow diagram illustrating activities associated with causation of display of supplemental map information according to at least one example embodiment. In at least one example embodiment, there is a set of operations that corresponds with the activities of FIGURE 12. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 12.

As discussed previously, in many circumstances, it may be desirable to track a non-display input and, in response, dynamically cause display of supplemental map information associated with a map position that corresponds with a non-display input position of the non-display input.

At block 1202, the apparatus causes display of a portion of map information on a display. The causation of display, the display, the map information, and the portion of map information may be similar as described regarding FIGURE 2, FIGURES 4A-4C, and FIGURES 5A-5C.

At block 1204, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1206, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1208, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1210, the apparatus determines a second map position along the traversable path based, at least in part, on the first non-display input position. In at least one example embodiment, the second map position fails to correspond with the displayed portion of the map information. The determination and the second map position may be similar as described regarding FIGURES 5A-5C, FIGURES 6A-6C, FIGURES 7A-7D, FIGURES 8A-8B, and FIGURES 9A-9B.

At block 1212, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1214, the apparatus receives information indicative of a second non-display input at a second non-display input position. The receipt, the second non-display input, and the second non-display input position may be similar as described regarding FIGURES 6A-6C, FIGURES 7A-7D, FIGURES 8A-8B, and FIGURES 9A-9B.

At block 1216, the apparatus determines a third map position along the traversable path based, at least in part, on the second non-display input position. In at least one example embodiment, the third map position fails to correspond with the displayed portion of the map information. The determination and the third map position may be similar as described regarding FIGURES 5A-5C, FIGURES 6A-6C, FIGURES 7A-7D, FIGURES 8A-8B, and FIGURES 9A-9B.

At block 1218, the apparatus causes display of third supplemental map information that comprises at least one element associated with the third map position that is absent from the map information. The causation of display, the third supplemental map information, and the at least one element associated with the third map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

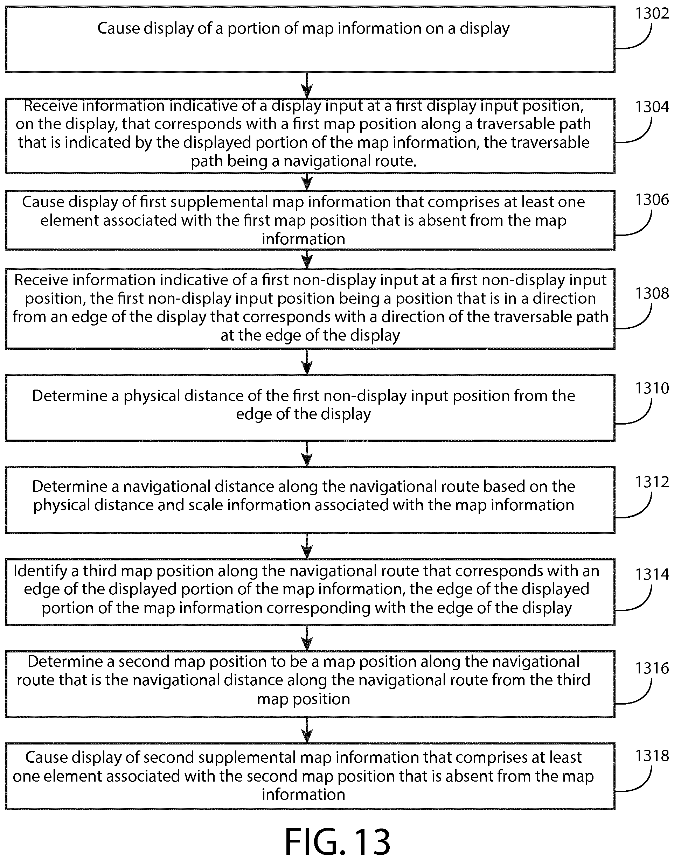

FIGURE 13 is a flow diagram illustrating activities associated with causation of display of supplemental map information according to at least one example embodiment. In at least one example embodiment, there is a set of operations that corresponds with the activities of FIGURE 13. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 13.

As discussed previously, in many circumstances, it may be desirable to determination a map position along a navigational route based, at least in part, on a physical distance between a non-display input and an edge of a display.

At block 1302, the apparatus causes display of a portion of map information on a display. The causation of display, the display, the map information, and the portion of map information may be similar as described regarding FIGURE 2, FIGURES 4A-4C, and FIGURES 5A-5C.

At block 1304, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1306, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1308, the apparatus receives information indicative of a first non-display input at a first non-display input position. In at least one example embodiment, the first non-display input position is a position that is in a direction from an edge of the display that corresponds with a direction of the traversable path at the edge of the display. The receipt, the first non-display input, the first non-display input position, the edge of the display, the direction from the edge of the display, and the direction of the traversable path at the edge of the display may be similar as described regarding FIGURES 6A-6C, FIGURES 7A-7D, FIGURES 8A-8B, and FIGURES 9A-9B.

At block 1310, the apparatus determines a physical distance of the first non-display input position from the edge of the display. The determination and the physical distance may be similar as described regarding FIGURES 6A-6C, FIGURES 7A-7D, FIGURES 8A-8B, and FIGURES 9A-9B.

At block 1312, the apparatus determines a navigational distance along the navigational route based, at least in part, on the physical distance and scale information associated with the map information. The determination, the navigational distance, and the scale information may be similar as described regarding FIGURES 6A-6C, FIGURES 7A-7D, FIGURES 8A-8B, and FIGURES 9A-9B.

At block 1314, the apparatus identifies a third map position along the navigational route that corresponds with an edge of the displayed portion of the map information, the edge of the displayed portion of the map information corresponding with the edge of the display. The identification, the third map position, and the edge of the displayed portion of the map information may be similar as described regarding FIGURES 6A-6C, FIGURES 7A-7D, FIGURES 8A-8B, and FIGURES 9A-9B.

At block 1316, the apparatus determines a second map position to be a map position along the navigational route that is the navigational distance along the navigational route from the third map position. The determination and the second map position may be similar as described regarding FIGURES 6A-6C, FIGURES 7A-7D, FIGURES 8A-8B, and FIGURES 9A-9B.

At block 1318, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

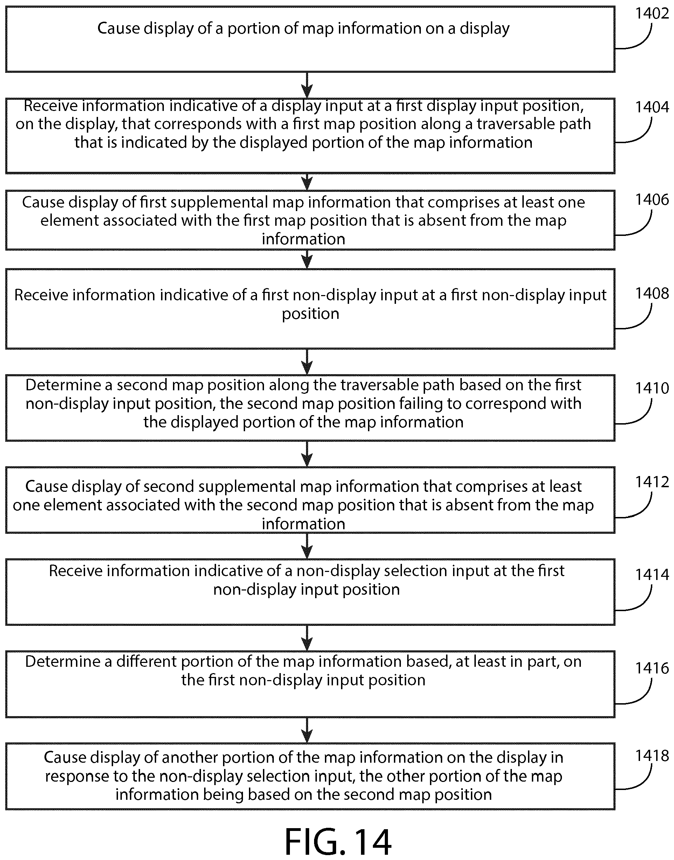

FIGURE 14 is a flow diagram illustrating activities associated with causation of display of supplemental map information according to at least one example embodiment. In at least one example embodiment, there is a set of operations that corresponds with the activities of FIGURE 14. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 14.

As discussed previously, in many circumstances, it may be desirable to display a portion of map information in response to a non-display selection input that corresponds with a particular map position.

At block 1402, the apparatus causes display of a portion of map information on a display. The causation of display, the display, the map information, and the portion of map information may be similar as described regarding FIGURE 2, FIGURES 4A-4C, and FIGURES 5A-5C.

At block 1404, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1406, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1408, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1410, the apparatus determines a second map position along the traversable path based, at least in part, on the first non-display input position. In at least one example embodiment, the second map position fails to correspond with the displayed portion of the map information. The determination and the second map position may be similar as described regarding FIGURES 5A-5C, FIGURES 6A-6C, FIGURES 7A-7D, FIGURES 8A-8B, and FIGURES 9A-9B.

At block 1412, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1414, the apparatus receives information indicative of a non-display selection input at the first non-display input position. The receipt and the non-display selection input may be similar as described regarding FIGURES 8A-8B.

At block 1416, the apparatus determines a different portion of the map information based, at least in part, on the first non-display input position. The determination and the different portion of the map information may be similar as described regarding FIGURES 8A-8B.

At block 1418, the apparatus causes display of the different portion of the map information in response to the non-display selection input. The causation and the display of the different portion of the map information may be similar as described regarding FIGURES 8A-8B.

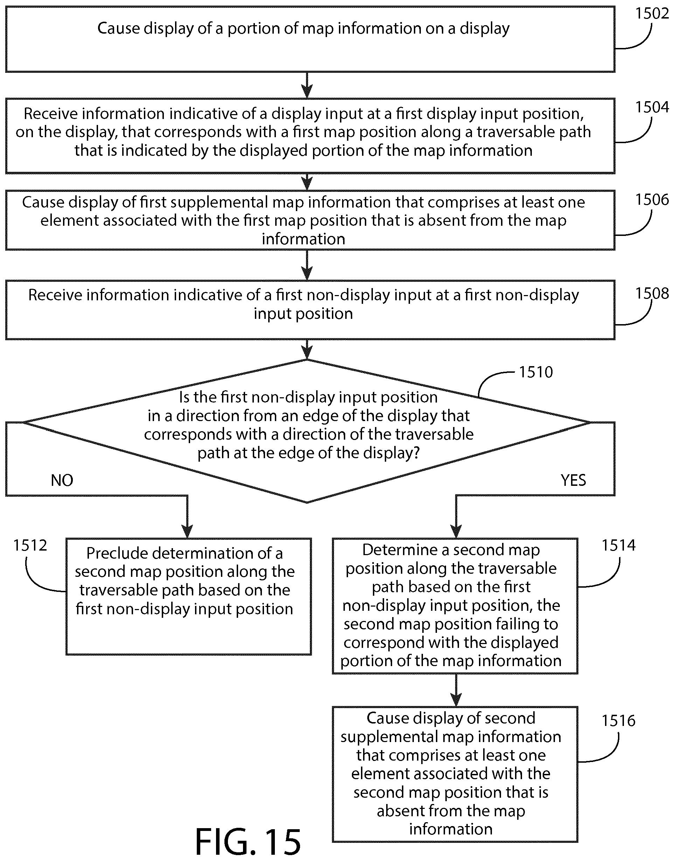

FIGURE 15 is a flow diagram illustrating activities associated with causation of display of supplemental map information according to at least one example embodiment. In at least one example embodiment, there is a set of operations that corresponds with the activities of FIGURE 15. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 15.

As discussed previously, in many circumstances, it may be desirable to determine whether a non-display input position is in a direction from an edge of the display that corresponds with a direction of a traversable path at the edge of the display.

At block 1502, the apparatus causes display of a portion of map information on a display. The causation of display, the display, the map information, and the portion of map information may be similar as described regarding FIGURE 2, FIGURES 4A-4C, and FIGURES 5A-5C.

At block 1504, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1506, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1508, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1510, the apparatus determines whether the non-display input position is in a direction from an edge of the display that corresponds with a direction of the traversable path at the edge of the display. If the apparatus determines that the non-display input position is in a direction from an edge of the display that corresponds with a direction of the traversable path at the edge of the display, flow proceeds to block 1514 of FIGURE 15. If the apparatus determines that the non-display input position fails to be in a direction from an edge of the display that corresponds with a direction of the traversable path at the edge of the display, flow proceeds to block 1512 of FIGURE 15. The determination, the edge of the display, the direction from the edge of the display, and the direction of the traversable path at the edge of the display may be similar as described regarding FIGURES 6A-6C, FIGURES 7A-7D, FIGURES 8A-8B, and FIGURES 9A-9B.

At block 1512, the apparatus precludes determination of a second map position along the traversable path based, at least in part, on the first non-display input position. In this manner, the preclusion of the determination of a second map position along the traversable path may be based, at least in part, on the determination that the non-display input position fails to be in a direction from an edge of the display that corresponds with a direction of the traversable path at the edge of the display. In at least one example embodiment, the apparatus precludes causation of display of second supplemental map information that comprises at least one element associated with the second map position that is absent from the map information based, at least in part, on the determination that the non-display input position fails to be in a direction from an edge of the display that corresponds with a direction of the traversable path at the edge of the display. The preclusion, the determination, and the second map position along the traversable path may be similar as described regarding FIGURES 6A-6C, FIGURES 7A-7D, FIGURES 8A-8B, and FIGURES 9A-9B.

At block 1514, the apparatus determines a second map position along the traversable path based, at least in part, on the first non-display input position. In at least one example embodiment, the second map position fails to correspond with the displayed portion of the map information. In this manner, the determination of a second map position along the traversable path may be in response to the determination that the non-display input position is in a direction from an edge of the display that corresponds with a direction of the traversable path at the edge of the display. The determination and the second map position may be similar as described regarding FIGURES 5A-5C, FIGURES 6A-6C, FIGURES 7A-7D, FIGURES 8A-8B, and FIGURES 9A-9B.

At block 1516, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

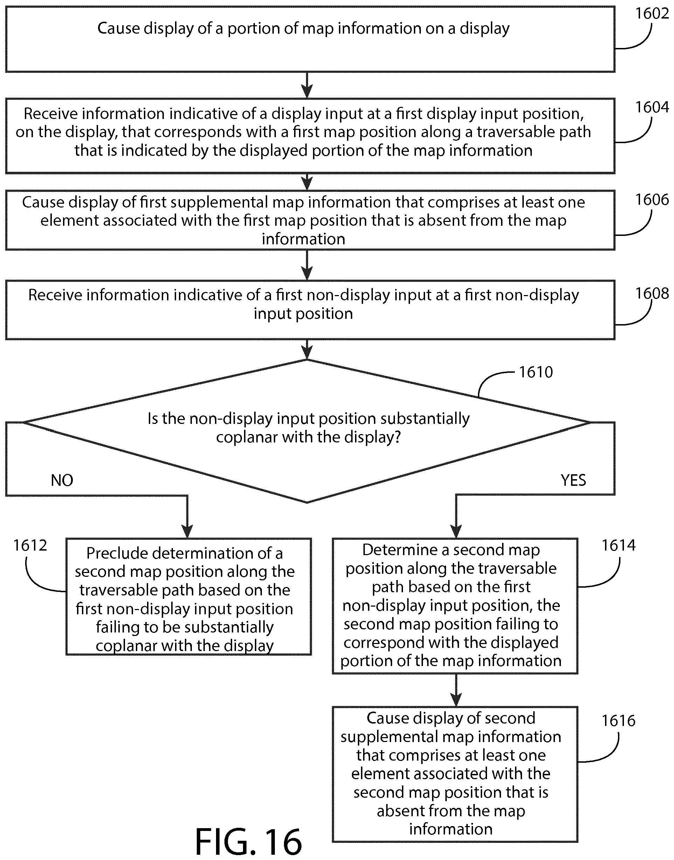

FIGURE 16 is a flow diagram illustrating activities associated with causation of display of supplemental map information according to at least one example embodiment. In at least one example embodiment, there is a set of operations that corresponds with the activities of FIGURE 16. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 16.

As discussed previously, in many circumstances, it may be desirable to determine whether a non-display input position is substantially coplanar with a display.

At block 1602, the apparatus causes display of a portion of map information on a display. The causation of display, the display, the map information, and the portion of map information may be similar as described regarding FIGURE 2, FIGURES 4A-4C, and FIGURES 5A-5C.

At block 1604, the apparatus receives information indicative of a first display input at a first display input position, on the display, that corresponds with a first map position along a traversable path that is indicated by the displayed portion of the map information. The receipt, the first display input, the first display input position, the first map position, and the traversable path may be similar as described regarding FIGURES 4A-4C, FIGURES 5A-5C, FIGURES 6A-6C, FIGURES 7A-7D, FIGURES 8A-8B, and FIGURES 9A-9B.

At block 1606, the apparatus causes display of first supplemental map information that comprises at least one element associated with the first map position that is absent from the map information. The causation of display, the first supplemental map information, and the at least one element associated with the first map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

At block 1608, the apparatus receives information indicative of a first non-display input at a first non-display input position. The receipt, the first non-display input, and the first non-display input position may be similar as described regarding FIGURES 6A-6C, FIGURES 7A-7D, FIGURES 8A-8B, and FIGURES 9A-9B.

At block 1610, the apparatus determines whether the non-display input position is substantially coplanar with the display. If the apparatus determines that the non-display input position is substantially coplanar with the display, flow proceeds to block 1614 of FIGURE 16. If the apparatus determines that the non-display input position fails to be substantially coplanar with the display, flow proceeds to block 1612 of FIGURE 16. The determination and substantially coplanar with the display may be similar as described regarding FIGURES 6A-6C, FIGURES 7A-7D, FIGURES 8A-8B, and FIGURES 9A-9B.

At block 1612, the apparatus precludes determination of a second map position along the traversable path based, at least in part, on the first non-display input position. In this manner, the preclusion of the determination of a second map position along the traversable path may be based, at least in part, on the determination that the non-display input position fails to be substantially coplanar with the display. In at least one example embodiment, the apparatus precludes causation of display of second supplemental map information that comprises at least one element associated with the second map position that is absent from the map information based, at least in part, on the determination that the non-display input position fails to be substantially coplanar with the display. The preclusion, the determination, and the second map position along the traversable path may be similar as described regarding FIGURES 6A-6C, FIGURES 7A-7D, FIGURES 8A-8B, and FIGURES 9A-9B.

At block 1614, the apparatus determines a second map position along the traversable path based, at least in part, on the first non-display input position. In at least one example embodiment, the second map position fails to correspond with the displayed portion of the map information. In this manner, the determination of a second map position along the traversable path may be in response to the determination that the non-display input position is substantially coplanar with the display. The determination and the second map position may be similar as described regarding FIGURES 5A-5C, FIGURES 6A-6C, FIGURES 7A-7D, FIGURES 8A-8B, and FIGURES 9A-9B.

At block 1616, the apparatus causes display of second supplemental map information that comprises at least one element associated with the second map position that is absent from the map information. The causation of display, the second supplemental map information, and the at least one element associated with the second map position may be similar as described regarding FIGURE 2, FIGURES 4A-4C, FIGURES 5A-5C, FIGURES 6A-6C, FIGURES 7A-7D, FIGURES 8A-8B, and FIGURES 9A-9B.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. Furthermore, if desired, one or more of the above-described functions may be optional or may be combined. For example, block 1610 of FIGURE 16 may be optional and/or combined with block 1608 of FIGURE 16.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method, comprising:
causing display of a portion (404) of map information (402) on a touch display, wherein the displayed portion (404) of the map information (402) comprises a traversable path (406) and a first map position, and wherein the traversable path (406) is a navigational route (410) which originates from the first map position;
receiving information indicative of a first display input, that is a touch input, at a first display input position, on the touch display, that corresponds with the first map position that is indicated by the displayed portion (404) of the map information (402);
causing display of first supplemental map information that comprises at least one element associated with the first map position that is absent from the map information (402), **characterized in that** the first supplemental map information comprises photographs captured at the location indicated by the first map position; and **in that** the method further comprises:
causing display of additional map information, the additional map information being map information that fails to be comprised by the displayed portion (404) of the map information (402) on the touch display, wherein the causing display of the additional map information comprises sending the additional map information to a separate apparatus such that the separate apparatus is caused to display the additional map information and wherein the separate apparatus is a head mounted display; receiving information indicative of interaction with the additional map information by way of a first non-display input, which is an input that fails to correspond with the touch display, at a first non-display input position;
prior to determination of a second map position along the traversable path, determining that the first non-display input is substantially coplanar with the touch display such that the first non-display input is within a coplanar tolerance, which is a maximum offset between a plane of the touch display and the first non-display input;
determining, based on the determination that the first non-display input is substantially coplanar with the touch display, a second map position along the traversable path (406) based, at least in part, on the first non-display input position, the second map position failing to correspond with the displayed portion of the map information (402);
causing display of second supplemental map information that comprises at least one element associated with the second map position that is absent from the map information (402), wherein the second supplemental map information comprises photographs captured at the location indicated by the second map position.

2. The method of Claim 1, further comprising, prior to the receipt of the first non-display input:
determining that the first display input has moved, by way of a user sliding a finger across the touch display, to a second display input position, on the touch display, that corresponds with a third map position along the traversable path (406) that is indicated by the displayed portion (404) of the map information (402); and
causing display of third supplemental map information that comprises at least one element associated with the third map position that is absent from the map information (402).

3. The method of any of Claims 1-2, wherein the first non-display input is in a direction from an edge of the touch display (604) that corresponds with a direction of the traversable path (406) at the edge of the touch display (604) and the first non-display input is aligned with the traversable path (406) at the edge of the touch display (604).

4. The method of Claim 3, further comprising:
receiving a second non-display input at a second non-display input position; and
determining that the second non-display input is in a direction from the edge of the touch display (604) that fails to correspond with the direction of the traversable path (406) at the edge of the touch display (604).

5. The method of Claim 4, further comprising:
determining that the second non-display input corresponds with a fourth map position along the traversable path (406); and
causing display of a supplemental map information corresponding to the fourth map position based, at least in part, on the determination that the second non-display input corresponds with the fourth map position along the traversable path (406), the supplemental map information corresponding to the fourth map position comprising at least one element associated with the fourth map position that is absent from the map information (402).

6. The method of any of Claims 1-5, further comprising:
receipt of information indicative of a non-display selection input at the first non-display input position;
determination of a different portion of the map information (402) based, at least in part, on the first non-display input position; and
causation of display of the different portion of the map information (402) in response to the non-display selection input.

7. The method of any of Claims 1-6, wherein, the first non-display input is in a direction from the edge of the touch display (604) that corresponds with a direction of the traversable path (406) at the edge of the touch display (604), and the determination of the second map position comprises:
determining a physical distance of the first non-display input position from the edge of the touch display (604);
determining a navigational distance along the navigational route (410) based, at least in part, on the physical distance and scale information associated with the map information (402);
identifying a third map position along the navigational route (410) that corresponds with an edge of the displayed portion of the map information (402), the edge of the displayed portion of the map information (402) corresponding with the edge of the touch display; and
determining the second map position to be a map position along the navigational route (410) that is the navigational distance along the navigational route (410) from the third map position.

8. An apparatus (10) comprising at least one processor (11) and at least one memory (12), the memory (12) comprising machine-readable instructions, that when executed cause the apparatus (10) to perform:
causation of display of a portion (404) of map information (402) on a touch display, wherein the displayed portion (404) of the map information (402) comprises a traversable path (406) and a first map position, and wherein the traversable path (406) is a navigational route (410) which originates from the first map position;
receipt of information indicative of a first display input, that is a touch input, at a first display input position, on the touch display, that corresponds with the first map position that is indicated by the displayed portion (404) of the map information (402),
causation of display of first supplemental map information that comprises at least one element associated with the first map position that is absent from the map information (402), **characterized in that** the first supplemental map information comprises photographs captured at the location indicated by the first map position, and **in that** the machine-readable instructions, when executed, cause the apparatus to also perform:
causation of display of additional map information, the additional map information being map information that fails to be comprised by the displayed portion of the map information on the touch display,wherein the causation of display of the additional map information comprises sending the additional map information to a separate apparatus such that the separate apparatus is caused to display the additional map information and wherein the separate apparatus is a head mounted display; receipt of information indicative of interaction with the additional map information by way of a first non-display input, which is an input that fails to correspond with the touch display, at a first non-display input position,
prior to the determination of the second map position along the traversable path, determining that the first non-display input is substantially coplanar with the touch display such that the first non-display input is within a coplanar tolerance, which is a maximum offset between a plane of the touch display and the first non-display input;
determination, based on the determination that the first non-display input is substantially coplanar with the touch display, of a second map position along the traversable path (406) based, at least in part, on the first non-display input position, the second map position failing to correspond with the displayed portion of the map information (402),
causation of display of second supplemental map information that comprises at least one element associated with the second map position that is absent from the map information (402), wherein the second supplemental map information comprises photographs captured at the location indicated by the second map position.

9. The apparatus (10) of Claim 8, wherein the apparatus comprises the touch display and means for receiving information indicative of an input implement at the first non-display input position, wherein the means for receiving comprises a camera module or a sensor.

10. The apparatus (10) of claim 9, wherein the at least one processor (11) and at least one memory (12), when executed, further cause the apparatus (10) to perform a method according to any of the claims 2-7.

11. At least one computer readable medium comprising instructions that, when executed by a computer, perform the method of any of claims 1-7.

## Patentansprüche

1. Verfahren, das Folgendes umfasst:
Bewirken der Anzeige eines Abschnitts (404) von Karteninformationen (402) auf einer Berührungsanzeige, wobei der angezeigte Abschnitt (404) der Karteninformationen (402) einen traversierbaren Pfad (406) und eine erste Kartenposition umfasst und wobei der traversierbare Pfad (406) eine Navigationsroute (410) ist, die von der ersten Kartenposition ausgeht;
Empfangen von Informationen, die eine erste Anzeigeeingabe, die eine Berührungseingabe ist, in einer ersten Anzeigeeingabeposition auf der Berührungsanzeige angeben, die der ersten Kartenposition, die vom angezeigten Abschnitt (404) der Karteninformationen (402) angegeben wird, entspricht;
Bewirken der Anzeige von ersten ergänzenden Karteninformationen, die mindestens ein Element umfassen, das mit der ersten Kartenposition verknüpft ist und in den Karteninformationen (402) fehlt, **dadurch gekennzeichnet, dass** die ersten ergänzenden Karteninformationen Fotografien umfassen, die an dem Ort, der von der ersten Kartenposition angegeben wird, aufgenommen wurden; und darin, dass das Verfahren ferner Folgendes umfasst:
Bewirken der Anzeige von zusätzlichen Karteninformationen, wobei die zusätzlichen Karteninformationen sind, die im angezeigten Abschnitt (404) der Karteninformationen (402) auf der Berührungsanzeige nicht umfasst sind, wobei das Bewirken der Anzeige der zusätzlichen Karteninformationen das Senden der zusätzlichen Karteninformationen an eine separate Vorrichtung umfasst, derart, dass bewirkt wird, dass die separate Vorrichtung die zusätzlichen Karteninformationen anzeigt, und wobei die separate Vorrichtung eine am Kopf montierte Anzeige ist;
Empfangen von Informationen, die eine Interaktion mit den zusätzlichen Karteninformationen mittels einer ersten Nichtanzeigeeingabe, die eine Eingabe ist, die nicht der Berührungsanzeige entspricht, in einer ersten Nichtanzeigeeingabeposition angeben;
vor der Bestimmung einer zweiten Kartenposition entlang des traversierbaren Pfades Bestimmen, dass die erste Nichtanzeigeeingabe im Wesentlichen mit der Berührungsanzeige koplanar ist, derart, dass die erste Nichtanzeigeeingabe innerhalb einer koplanaren Toleranz liegt, die ein maximaler Versatz zwischen einer Ebene der Berührungsanzeige und der ersten Nichtanzeigeeingabe ist;
Bestimmen auf Basis der Bestimmung, dass die erste Nichtanzeigeeingabe im Wesentlichen mit der Berührungsanzeige koplanar ist, einer zweiten Kartenposition entlang des traversierbaren Pfades (406) mindestens teilweise auf Basis der ersten Nichtanzeigeeingabeposition, wobei die zweite Kartenposition dem angezeigten Abschnitt der Karteninformationen (402) nicht entspricht;
Bewirken der Anzeige von zweiten ergänzenden Karteninformationen, die mindestens ein Element umfassen, das mit der zweiten Kartenposition verknüpft ist und in den Karteninformationen (402) fehlt, wobei die zweiten ergänzenden Karteninformationen Fotografien umfassen, die an dem Ort, der von der zweiten Kartenposition angegeben wird, aufgenommen wurden.

2. Verfahren nach Anspruch 1, das vor dem Empfang der ersten Nichtanzeigeeingabe ferner Folgendes umfasst:
Bestimmen, dass sich die erste Anzeigeeingabe durch einen Benutzer, der einen Finger über die Berührungsanzeige geschoben hat, zu einer zweiten Anzeigeeingabeposition auf der Berührungsanzeige, die einer dritten Kartenposition entlang eines traversierbaren Pfades (406) entspricht, die vom angezeigten Abschnitt (404) der Karteninformationen (402) angegeben wird, bewegt hat; und
Bewirken der Anzeige von dritten ergänzenden Karteninformationen, die mindestens ein Element umfassen, das mit der dritten Kartenposition verknüpft ist und in den Karteninformationen (402) fehlt.

3. Verfahren nach einem der Ansprüche 1-2, wobei die erste Nichtanzeigeeingabe in eine Richtung von einem Rand der Berührungsanzeige (604), die einer Richtung des traversierbaren Pfades (406) am Rand der Berührungsanzeige (604) entspricht, erfolgt und die erste Nichtanzeigeeingabe auf den traversierbaren Pfad (406) am Rand der Berührungsanzeige (604) ausgerichtet ist.

4. Verfahren nach Anspruch 3, das ferner Folgendes umfasst:
Empfangen einer zweiten Nichtanzeigeeingabe und einer zweiten Nichtanzeigeeingabeposition und
Bestimmen, dass die zweite Nichtanzeigeeingabe in eine Richtung vom Rand der Berührungsanzeige (604), die nicht der Richtung des traversierbaren Pfades (406) am Rand der Berührungsanzeige (604) entspricht, erfolgt.

5. Verfahren nach Anspruch 4, das ferner Folgendes umfasst:
Bestimmen, dass die zweite Nichtanzeigeeingabe einer vierten Kartenposition entlang des traversierbaren Pfades (406) entspricht; und
Bewirken der Anzeige von ergänzenden Karteninformationen, die der vierten Kartenposition entsprechen, mindestens teilweise auf Basis der Bestimmung, dass die zweite Nichtanzeigeeingabe der vierten Kartenposition entlang des traversierbaren Pfades (406) entspricht, wobei die ergänzenden Karteninformationen, die der vierten Kartenposition entsprechen, mindestens ein Element umfassen, das mit der vierten Kartenposition, die in den Karteninformationen (402) fehlt, verknüpft ist.

6. Verfahren nach einem der Ansprüche 1-5, das ferner Folgendes umfasst:
Empfang von Informationen, die eine Nichtanzeigeauswahleingabe in der ersten Nichtanzeigeeingabeposition angeben;
Bestimmung eines anderen Abschnitts der Karteninformationen (402) mindestens teilweise auf Basis der ersten Nichtanzeigeeingabeposition und Bewirkung der Anzeige des anderen Abschnitts der Karteninformationen (402) in Reaktion auf die Nichtanzeigeauswahleingabe.

7. Verfahren nach einem der Ansprüche 1-6, wobei die erste Nichtanzeigeeingabe in eine Richtung vom Rand der Berührungsanzeige (604), die einer Richtung des traversierbaren Pfades (406) am Rand der Berührungsanzeige (604) entspricht, erfolgt und die Bestimmung der zweiten Kartenposition Folgendes umfasst:
Bestimmen eines physischen Abstandes der ersten Nichtanzeigeeingabeposition vom Rand der Berührungsanzeige (604);
Bestimmen eines Navigationsabstandes entlang der Navigationsroute (410) mindestens teilweise auf Basis des physischen Abstandes und von Maßstabsinformationen, die mit den Karteninformationen (402) verknüpft sind;
Identifizieren einer dritten Kartenposition entlang der Navigationsroute (410), die einem Rand des angezeigten Abschnitts der Karteninformationen (402) entspricht, wobei der Rand des angezeigten Abschnitts der Karteninformationen (402) dem Rand der Berührungsanzeige entspricht; und
Bestimmen, dass die zweite Kartenposition eine Kartenposition entlang der Navigationsroute (410) ist, die der Navigationsabstand entlang der Navigationsroute (410) von der dritten Kartenposition ist.

8. Vorrichtung (10), die mindestens einen Prozessor (11) und mindestens einen Speicher (12) umfasst, wobei der Speicher (12) maschinenlesbare Anweisungen umfasst, die, wenn sie ausgeführt werden, bewirken, dass die Vorrichtung (10) Folgendes durchführt:
Bewirkung der Anzeige eines Abschnitts (404) von Karteninformationen (402) auf einer Berührungsanzeige, wobei der angezeigte Abschnitt (404) der Karteninformationen (402) einen traversierbaren Pfad (406) und eine erste Kartenposition umfasst und wobei der traversierbare Pfad (406) eine Navigationsroute (410) ist, die von der ersten Kartenposition ausgeht;
Empfang von Informationen, die eine erste Anzeigeeingabe, die eine Berührungseingabe ist, in einer ersten Anzeigeeingabeposition auf der Berührungsanzeige angeben, die der ersten Kartenposition, die vom angezeigten Abschnitt (404) der Karteninformationen (402) angegeben wird, entspricht, Bewirkung der Anzeige von ersten ergänzenden Karteninformationen, die mindestens ein Element umfassen, das mit der ersten Kartenposition verknüpft ist und in den Karteninformationen (402) fehlt, **dadurch gekennzeichnet, dass** die ersten ergänzenden Karteninformationen Fotografien umfassen, die an dem Ort, der von der ersten Kartenposition angegeben wird, aufgenommen wurden; und darin, dass die maschinenlesbaren Anweisungen, wenn sie ausgeführt werden, bewirken, dass die Vorrichtung außerdem Folgendes durchführt:
Bewirkung der Anzeige von zusätzlichen Karteninformationen, wobei die zusätzlichen Karteninformationen Karteninformationen sind, die im angezeigten Abschnitt der Karteninformationen auf der Berührungsanzeige nicht umfasst sind, wobei die Bewirkung der Anzeige der zusätzlichen Karteninformationen das Senden der zusätzlichen Karteninformationen an eine separate Vorrichtung umfasst, derart, dass bewirkt wird, dass die separate Vorrichtung die zusätzlichen Karteninformationen anzeigt, und wobei die separate Vorrichtung eine am Kopf montierte Anzeige ist;
Empfang von Informationen, die eine Interaktion mit den zusätzlichen Karteninformationen mittels einer ersten Nichtanzeigeeingabe, die eine Eingabe ist, die nicht der Berührungsanzeige entspricht, in einer ersten Nichtanzeigeeingabeposition angeben,
vor der Bestimmung der zweiten Kartenposition entlang des traversierbaren Pfades Bestimmen, dass die erste Nichtanzeigeeingabe im Wesentlichen mit der Berührungsanzeige koplanar ist, derart, dass die erste Nichtanzeigeeingabe innerhalb einer koplanaren Toleranz liegt, die ein maximaler Versatz zwischen einer Ebene der Berührungsanzeige und der ersten Nichtanzeigeeingabe ist;
Bestimmung auf Basis der Bestimmung, dass die erste Nichtanzeigeeingabe im Wesentlichen mit der Berührungsanzeige koplanar ist, einer zweiten Kartenposition entlang des traversierbaren Pfades (406) mindestens teilweise auf Basis der ersten Nichtanzeigeeingabeposition, wobei die zweite Kartenposition dem angezeigten Abschnitt der Karteninformationen (402) nicht entspricht,
Bewirkung der Anzeige von zweiten ergänzenden Karteninformationen, die mindestens ein Element umfassen, das mit der zweiten Kartenposition verknüpft ist und in den Karteninformationen (402) fehlt, wobei die zweiten ergänzenden Karteninformationen Fotografien umfassen, die an dem Ort, der von der zweiten Kartenposition angegeben wird, aufgenommen wurden.

9. Vorrichtung (10) nach Anspruch 8, wobei die Vorrichtung die Berührungsanzeige und Mittel zum Empfangen von Informationen, die ein Eingabewerkzeug in der ersten Nichtanzeigeeingabeposition angeben, umfasst, wobei die Mittel zum Empfangen ein Kameramodul oder einen Sensor umfassen.

10. Vorrichtung (10) nach Anspruch 9, wobei der mindestens eine Prozessor (11) und mindestens ein Speicher (12), wenn sie ausgeführt werden, ferner bewirken, dass die Vorrichtung (10) ein Verfahren nach einem der Ansprüche 2-7 durchführt.

11. Mindestens ein computerlesbares Medium, das Anweisungen umfasst, die, wenn sie von einem Computer ausgeführt werden, das Verfahren nach einem der Ansprüche 1-7 durchführen.

## Revendications

1. Procédé, comprenant :
l'induction de l'affichage d'une partie (404) d'informations cartographiques (402) sur un écran tactile, la partie affichée (404) des informations cartographiques (402) comprenant un trajet parcourable (406) et une première position cartographique, et le trajet parcourable (406) étant un itinéraire de navigation (410) qui démarre de la première position cartographique ;
la réception d'informations représentatives d'une première entrée d'écran, qui est une entrée tactile, à une première position d'entrée d'écran, sur l'écran tactile, qui correspond à la première position cartographique qui est indiquée par la partie affichée (404) des informations cartographiques (402) ;
l'induction de l'affichage de premières informations cartographiques complémentaires qui comprennent au moins un élément associé à la première position cartographique qui est absent des informations cartographiques (402), **caractérisé en ce que** les premières informations cartographiques complémentaires comprennent des photographies capturées à l'emplacement indiqué par la première position cartographique ; et **en ce que** le procédé comprend en outre :
l'induction de l'affichage d'informations cartographiques supplémentaires, les informations cartographiques supplémentaires étant des informations cartographiques qui ne sont pas comprises dans la partie affichée (404) des informations cartographiques (402) sur l'écran tactile, l'induction de l'affichage des informations cartographiques supplémentaires comprenant l'envoi des informations cartographiques supplémentaires à un appareil séparé de telle sorte que l'appareil séparé est amené à afficher les informations cartographiques supplémentaires, et l'appareil séparé étant un dispositif d'affichage monté sur la tête ;
la réception d'informations représentatives d'une interaction avec les informations cartographiques supplémentaires au moyen d'une première entrée hors écran, qui est une entrée qui ne correspond pas à l'écran tactile, à une première position d'entrée hors écran ;
avant la détermination d'une deuxième position cartographique le long du trajet parcourable, la détermination que la première entrée hors écran est sensiblement coplanaire avec l'écran tactile de telle sorte que la première entrée hors écran se situe à l'intérieur d'une tolérance coplanaire, qui est un décalage maximal entre un plan de l'écran tactile et la première entrée hors écran ;
la détermination, sur la base de la détermination que la première entrée hors écran est sensiblement coplanaire avec l'écran tactile, d'une deuxième position cartographique le long du trajet parcourable (406) au moins en partie sur la base de la première position d'entrée hors écran, la deuxième position cartographique ne correspondant pas à la partie affichée des informations cartographiques (402) ;
l'induction de l'affichage de deuxièmes informations cartographiques complémentaires qui comprennent au moins un élément associé à la deuxième position cartographique qui est absent des informations cartographiques (402), les deuxièmes informations cartographiques complémentaires comprenant des photographies capturées à l'emplacement indiqué par la deuxième position cartographique.

2. Procédé de la revendication 1, comprenant en outre, avant la réception de la première entrée hors écran :
la détermination que la première entrée d'écran a bougé, par le biais d'un utilisateur faisant glisser un doigt à travers l'écran tactile, jusqu'à une deuxième position d'entrée d'écran, sur l'écran tactile, qui correspond à une troisième position cartographique le long du trajet parcourable (406) qui est indiquée par la partie affichée (404) des informations cartographiques (402) ; et
l'induction de l'affichage de troisièmes informations cartographiques complémentaires qui comprennent au moins un élément associé à la troisième position cartographique qui est absent des informations cartographiques (402).

3. Procédé de l'une quelconque des revendications 1 et 2, dans lequel la première entrée hors écran se trouve dans une direction depuis un bord de l'écran tactile (604) qui correspond à une direction du trajet parcourable (406) au bord de l'écran tactile (604) et la première entrée hors écran est alignée avec le trajet parcourable (406) au bord de l'écran tactile (604) .

4. Procédé de la revendication 3, comprenant en outre :
la réception d'une deuxième entrée hors écran à une deuxième position d'entrée hors écran ; et
la détermination que la deuxième entrée hors écran se trouve dans une direction depuis le bord de l'écran tactile (604) qui ne correspond pas à la direction du trajet parcourable (406) au bord de l'écran tactile (604) .

5. Procédé de la revendication 4, comprenant en outre :
la détermination que la deuxième entrée hors écran correspond à une quatrième position cartographique le long du trajet parcourable (406) ; et
l'induction de l'affichage d'informations cartographiques complémentaires correspondant à la quatrième position cartographique au moins en partie sur la base de la détermination que la deuxième entrée hors écran correspond à la quatrième position cartographique le long du trajet parcourable (406), les informations cartographiques complémentaires correspondant à la quatrième position cartographique comprenant au moins un élément associé à la quatrième position cartographique qui est absent des informations cartographiques (402).

6. Procédé de l'une quelconque des revendications 1 à 5, comprenant en outre :
la réception d'informations représentatives d'une entrée de sélection hors écran à la première position d'entrée hors écran ;
la détermination d'une partie différente des informations cartographiques (402) au moins en partie sur la base de la première position d'entrée hors écran ; et
l'induction de l'affichage de la partie différente des informations cartographiques (402) en réponse à l'entrée de sélection hors écran.

7. Procédé de l'une quelconque des revendications 1 à 6, dans lequel la première entrée hors écran se trouve dans une direction depuis le bord de l'écran tactile (604) qui correspond à une direction du trajet parcourable (406) au bord de l'écran tactile (604), et la détermination de la deuxième position cartographique comprend :
la détermination d'une distance physique de la première position d'entrée hors écran depuis le bord de l'écran tactile (604) ;
la détermination d'une distance de navigation le long de l'itinéraire de navigation (410) au moins en partie sur la base de la distance physique et d'informations d'échelle associées aux informations cartographiques (402) ;
l'identification d'une troisième position cartographique le long de l'itinéraire de navigation (410) qui correspond à un bord de la partie affichée des informations cartographiques (402), le bord de la partie affichée des informations cartographiques (402) correspondant au bord de l'écran tactile ; et
la détermination de la deuxième position cartographique comme étant une position cartographique le long de l'itinéraire de navigation (410) qui est à la distance de navigation le long de l'itinéraire de navigation (410) depuis la troisième position cartographique.

8. Appareil (10) comprenant au moins un processeur (11) et au moins une mémoire (12), la mémoire (12) comprenant des instructions lisibles par machine qui, lorsqu'elles sont exécutées, conduisent l'appareil (10) à effectuer :
l'induction de l'affichage d'une partie (404) d'informations cartographiques (402) sur un écran tactile, la partie affichée (404) des informations cartographiques (402) comprenant un trajet parcourable (406) et une première position cartographique, et le trajet parcourable (406) étant un itinéraire de navigation (410) qui démarre de la première position cartographique ;
la réception d'informations représentatives d'une première entrée d'écran, qui est une entrée tactile, à une première position d'entrée d'écran, sur l'écran tactile, qui correspond à la première position cartographique qui est indiquée par la partie affichée (404) des informations cartographiques (402) ;
l'induction de l'affichage de premières informations cartographiques complémentaires qui comprennent au moins un élément associé à la première position cartographique qui est absent des informations cartographiques (402), **caractérisé en ce que** les premières informations cartographiques complémentaires comprennent des photographies capturées à l'emplacement indiqué par la première position cartographique, et **en ce que** les instructions lisibles par machine, lorsqu'elles sont exécutées, conduisent l'appareil à effectuer également :
l'induction de l'affichage d'informations cartographiques supplémentaires, les informations cartographiques supplémentaires étant des informations cartographiques qui ne sont pas comprises dans la partie affichée des informations cartographiques sur l'écran tactile, l'induction de l'affichage des informations cartographiques supplémentaires comprenant l'envoi des informations cartographiques supplémentaires à un appareil séparé de telle sorte que l'appareil séparé est amené à afficher les informations cartographiques supplémentaires, et l'appareil séparé étant un dispositif d'affichage monté sur la tête ;
la réception d'informations représentatives d'une interaction avec les informations cartographiques supplémentaires au moyen d'une première entrée hors écran, qui est une entrée qui ne correspond pas à l'écran tactile, à une première position d'entrée hors écran ;
avant la détermination de la deuxième position cartographique le long du trajet parcourable, la détermination que la première entrée hors écran est sensiblement coplanaire avec l'écran tactile de telle sorte que la première entrée hors écran se situe à l'intérieur d'une tolérance coplanaire, qui est un décalage maximal entre un plan de l'écran tactile et la première entrée hors écran ;
la détermination, sur la base de la détermination que la première entrée hors écran est sensiblement coplanaire avec l'écran tactile, d'une deuxième position cartographique le long du trajet parcourable (406) au moins en partie sur la base de la première position d'entrée hors écran, la deuxième position cartographique ne correspondant pas à la partie affichée des informations cartographiques (402) ;
l'induction de l'affichage de deuxièmes informations cartographiques complémentaires qui comprennent au moins un élément associé à la deuxième position cartographique qui est absent des informations cartographiques (402), les deuxièmes informations cartographiques complémentaires comprenant des photographies capturées à l'emplacement indiqué par la deuxième position cartographique.

9. Appareil (10) de la revendication 8, l'appareil comprenant l'écran tactile et un moyen de réception d'informations représentatives d'une entrée effectuée à la première position d'entrée hors écran, le moyen de réception comprenant un module de caméra ou un capteur.

10. Appareil (10) de la revendication 9, dans lequel l'au moins un processeur (11) et au moins une mémoire (12), lorsqu'ils sont exécutés, conduisent en outre l'appareil (10) à effectuer un procédé selon l'une quelconque des revendications 2 à 7.

11. Au moins un support lisible par ordinateur comprenant des instructions qui, lorsqu'elles sont exécutées par un ordinateur, effectuent le procédé de l'une quelconque des revendications 1 à 7.
